# EUROPÄISCHE PATENTSCHRIFT

(11) **EP 3 123 208 B1**
(45) Veröffentlichungstag und Bekanntmachung des Hinweises auf die Patenterteilung: **16.09.2020**
(21) Anmeldenummer: 15711548.6
(22) Anmeldetag: 24.03.2015
(51) Int. Cl.: G01V 5/00, G06T 7/00

(54) **DETEKTION VON GEGENSTÄNDEN IN EINEM OBJEKT**
DETECTION OF ITEMS IN A CONTAINER
DETECTION DES OBJETS DANS UN RECIPIENT

(30) Priorität: 24.03.2014 DE 102014205447
(43) Veröffentlichungstag der Anmeldung: 01.02.2017
(73) Patentinhaber: Smiths Heimann GmbH, 65205 Wiesbaden (DE)
(72) Erfinder: HEILMANN, Geert, 65207 Wiesbaden (DE)
(74) Vertreter: Klunker IP Patentanwälte PartG mbB
(86) Internationale Anmeldenummer: PCT/EP2015/056259
(87) Internationale Veröffentlichungsnummer: WO 2015/144706

(56) Entgegenhaltungen:
- EP-A1- 1 522 878
- EP-A1- 2 375 375
- EP-A1- 2 696 196
- WO-A2-2008/149357
- US-A1- 2011 222 779
- US-B1- 6 711 293
- WAI HO LI ET AL: "Real Time Detection and Segmentation of Reflectionally Symmetric Objects in Digital Images", INTELLIGENT ROBOTS AND SYSTEMS, 2006 IEEE/RSJ INTERNATIONAL CONFERENCE ON, IEEE, PI, 1. Oktober 2006 (2006-10-01), Seiten 4867-4873, XP031006900, ISBN: 978-1-4244-0258-8

## Beschreibung

### Gebiet der Erfindung

Die Erfindung betrifft im Allgemeinen die zerstörungsfreie Inspektion von Objekten mittels ionisierender Strahlung. Die Erfindung betrifft im Besonderen ein Verfahren zur Detektion von Gegenständen mit einer Symmetrieeigenschaft in einem mittels ionisierender Strahlung erzeugten Bild des Objekts, insbesondere eines Gepäckstücks, beispielsweise einem mittels einer Röntgenprüfanlage erzeugten Röntgenbild.

### Hintergrund der Erfindung

DE 101 49 254 A1 zeigt eine Röntgenprüfanlage mit mehreren feststehenden Strahlungsebenen zur zerstörungsfreien Inspektion von Objekten (Inspektionsobjekt). Eine derartige Inspektion kann beispielsweise im Rahmen einer Sicherheitsüberprüfung von Gepäckstücken auf Flughäfen erfolgen. Ein Inspektionsobjekt wird bei der Inspektion durch die mehreren Strahlungsebenen gefördert, die jeweils von einer ortsfesten Strahlenquelle abgegeben werden. Die Intensitäten der vom Inspektionsobjekt und seinem Inhalt nicht absorbierten Röntgenstrahlen werden von den Strahlenquellen zugeordneten Detektoranordnungen gemessen. Die gemessenen Intensitätswerte werden ausgewertet und u. a. zur Erstellung von Röntgenbildern des Inspektionsobjekts verwendet, anhand derer eine Überprüfung des Inhalts des Inspektionsobjekts erfolgen kann.

Problematisch, besonders im Hinblick auf eine automatisierte Überprüfung, sind in Gepäckstücken mitgeführte Behältnisse, wie beispielsweise Flaschen. Flaschen können gefährliche Flüssigkeiten enthalten. Daher dürfen Flüssigkeiten, wenn überhaupt, nur in geringen Mengen an Bord von Flugzeugen mitgenommen werden. Derartige Behältnisse müssen im Stand der Technik bei der Sicherheitskontrolle von Handgepäck an Flughäfen in Röntgenbildern vom Sicherheitspersonal zunächst erkannt und dem Gepäckstück für eine Sichtprüfung entnommen werden. Dieser zusätzliche Kontrollaufwand verursacht Verzögerungen bei der Passagierabfertigung. Ähnlich problematisch ist dies bei aufgegebenen Gepäckstücken. Auch dort muss ein Gepäckstück ggf. aus der automatischen Abfertigung genommen und einer manuellen Kontrolle zugeführt werden, bei der eine Öffnung des Gepäckstücks für eine Sichtprüfung und ggf. weitere Überprüfungen erforderlich werden kann. Dies führt ebenfalls zu Verzögerungen.

US 2012/0275646 A1 offenbart ein Verfahren zu genaueren Bestimmung von sich in einem Inspektionsobjekt befindlichen und in einem Röntgenbild des Gegenstands bereits aufgefundenen Gegenständen (Blobs). Zur genaueren Bestimmung werden die erkannten Blobs unter anderem auf Symmetrie untersucht. Ähnlich hierzu wird in der EP 2 696 196 A1 vorgeschlagen, eine Flasche vor dem Röntgen in eine spezielle Box zu legen, damit die Flasche mit einem vorbekannten Winkel zur Standfläche angeordnet ist, sodass für eine Auswertung des Röntgenbilds der Flasche bzgl. eines möglichen Gefahrenpotenzials ihres Inhalts alle geometrischen Informationen bezüglich der Anordnung der Flasche bekannt sind. Ähnliches gilt für die DE 20 2007 019 256 U1.

Li, Zhang und Kleeman in "Real Time Detection and Segmentation of Reflectionally Symmetric Objects in Digital Images" (Proceedings of the 2006 IEEE/RSJ, International Conference on Intelligent Robots and Systems, October 9 - 15, 2006, Beijing, China) schlagen einen Bildverarbeitungsalgorithmus zur Detektion von Symmetrielinien in einem Kantenbild vor.

US 2011/0222779 A1 betrifft die Detektion und Klassifikation von Kanten in der Bildverarbeitung. Dabei wird vorgeschlagen, eine Kante bei einem Pixel eines Bildes basierend auf einem Nulldurchgang in der zweiten Ableitung der Intensitätsverteilung entlang der Reihe von Pixeln, die das Pixel enthält, und einem Nulldurchgang in der zweiten Ableitung der Intensitätsverteilung entlang der Spalte von Pixeln, die das Pixel enthält, detektiert und eine Kantenorientierung bei dem Pixel anhand der Nulldurchgänge und anhand eines Nulldurchgangs in der zweiten Ableitung der Intensitätsverteilung entlang einer Reihe von Pixeln, die ein benachbartes Pixel enthält, und eines Nulldurchgangs in der zweiten Ableitung der Intensitätsverteilung entlang einer Spalte von Pixeln, die das benachbarte Pixel enthält, bestimmt, wobei die Nulldurchgänge entweder ein Übergang von einer hohen zu einer geringen Intensität oder von einer geringen zu einer hohen Intensität sind.

EP 2 375 375 A1 betrifft Bildanalysealgorithmen zur Analyse von geometrischen Objekten in einem Bild, wobei der Algorithmus Nutzereingaben betreffend das zu analysierende Objekt erfordert, d.h., der Nutzer muss das Objekt als solches bereits erkannt haben.

### Offenbarung der Erfindung

Es ist eine Aufgabe der vorliegenden Erfindung, ein Verfahren zur automatisierten Erkennung bzw. Auffinden von Behältnissen in einem mittels einer Röntgeninspektion eines Objekts, wie einem Gepäckstück, erzeugten Röntgenbild vorzuschlagen. Es ist eine weitere Aufgabe der vorliegenden Erfindung, eine Vorrichtung zur Durchführung des Verfahrens bereit zu stellen.

Diese Aufgabe wird mit den Merkmalen der unabhängigen Ansprüche gelöst. Weiterbildungen und vorteilhafte Ausgestaltungen sind in den jeweils abhängigen Ansprüchen angegeben. Dabei gelten Merkmale und Details, die im Zusammenhang mit dem erfindungsgemäßen Verfahren beschrieben sind, selbstverständlich auch im Zusammenhang mit der Vorrichtung bzw. Röntgenprüfanlage und jeweils umgekehrt; somit wird bezüglich der Offenbarung der einzelnen Aspekte wechselseitig Bezug genommen.

Ein Kerngedanke der Erfindung besteht darin, Bereiche in einem Röntgenbild eines Objekts basierend auf der Erkennung von Symmetrieeigenschaften als einem in dem Objekt enthaltenen Behältnis zugehörig zu identifizieren. Mit anderen Worten sollen in einem Objekt enthaltene Behältnisse mit Symmetrieeigenschaften anhand eines Röntgenbilds des Objekts aufgefunden werden. Wird ein Behältnis erkannt, kann basierend auf dem Wissen über das vorhandene Behältnis mit sich anschließenden Verfahren auf den Inhalt des Behältnisses, z.B. eine Flüssigkeit, und damit z.B. auf ein mögliches Gefährdungspotential geschlossen werden. Vorteilhaft ist dabei insbesondere, bei der Analyse des Inhalts der Einfluss des Materials, aus dem das Behältnis besteht, zu berücksichtigen. Der Erfinder hat erkannt, dass sich Behältnisse regelmäßig durch Symmetrieeigenschaften auszeichnen. Der Erfinder schlägt daher vor, zum Auffinden von Behältnissen in einem Röntgenbild dieses Vorwissen zu nutzen.

Bei in Gepäckstücken aufzufindenden Behältnissen handelt es sich häufig um Flaschen. Daher wird in den folgenden Ausführungen eine "Flasche" synonym für die Gattung "Behältnis mit wenigstens einer Symmetrieeigenschaften" verwendet; dies bedeutet jedoch nicht, dass die hier erläuterten Prinzipien nur auf Flaschen beschränkt sind. Grundsätzlich können die vom Erfinder vorgeschlagenen Verfahren und Verbesserungen beispielsweise entsprechend zum Auffinden von Rohrbomben, Waffen- oder Munitionsteilen oder Ähnlichem eingesetzt werden. "Wenigstens eine Symmetrieeigenschaft" bedeutet, dass das Behältnis nicht zwingend in allen möglichen Ansichten einen symmetrischen Umriss aufweisen muss und/oder nur in Teilbereichen symmetrisch sein kann. Eine Symmetrieeigenschaft eines Gegenstands definiert eine zugehörige Symmetrielinie. Sind die zu Gegenständen in einem Bild gehörigen Symmetrielinien bekannt, kann der im Bild enthaltene Gegenstand leichter aufgefunden bzw. erkannt werden, indem die im Bild zu einem solchen Gegenstand gehörigen Bildbereiche leichter identifiziert und segmentiert werden können. Der Erfinder schlägt vor, dies auf Röntgenbilder anzuwenden.

Zur Vorbereitung des Auffindens von Symmetrielinien wird ein Röntgenbild zuerst vorverarbeitet, um Merkmale in dem Röntgenbild zu identifizieren. Dabei ist es bevorzugt und vorteilhaft, wenn den zu identifizierenden Merkmalen in dem Röntgenbild eine Richtung zugeordnet werden kann. Das Ergebnis dieser Vorverarbeitung des Röntgenbilds ist dann ein Merkmalsbild, in dem die identifizierten Merkmale hervorgehoben und/oder freigestellt sind. Bevorzugt werden als Merkmal Außenkanten einzelner im Röntgenbild enthaltener Gegenständen ermittelt (detektiert). Das Ergebnis der Vorverarbeitung des Röntgenbilds ist dann ein Kantenbild, in dem die als Merkmale identifizierten Außenkanten hervorgehoben und/oder freigestellt (d.h. Bildpunkte, die wahrscheinlich nicht zu einer Außenkante gehören, wurden herausgefiltert) sind. Diese Vorverarbeitung kann auch als Kantenextraktion bezeichnet werden.

Dabei ist jedoch bei einem solchen Kantenbild noch nicht bekannt, welche Kanten zu einem bestimmten Gegenstand gehören. Die Zuordnung bestimmter Außenkanten zu einem bestimmten Gegenstand stellt quasi das Auffinden des Gegenstands dar. Dies ist ein entscheidender Unterschied zu den im Stand der Technik bekannten Verfahren, bei denen bereits in einem Bild erkannte Gegenstände näher bestimmt werden sollen, beispielsweise indem die bereits bekannten Außenkanten eines solchen Gegenstands auf Symmetrieeigenschaften untersucht werden. Die vorliegende Erfindung geht (wie noch im einzelnen erläutert wird) einen anderen Weg, indem gemäß des Kerngedankens der Erfindung versucht wird, im Kantenbild eine Symmetrielinie aufzufinden, die zu einem Gegenstand mit Symmetrieeigenschaften gehören könnte. Basierend auf einer gefundenen Symmetrielinie können die Außenkanten eines zu dieser Symmetrielinie gehörigen Gegenstands identifiziert werden und kann damit der Gegenstand im Bild aufgefunden werden.

Unter den Außenkanten bzw. der Außenkante eines Gegenstands werden hier im Röntgenbild definierbare Linien verstanden, die ein Teil einer Umrisslinie oder eine vollständige Umrisslinie des im Röntgenbild abgebildeten Gegenstandes ist bzw. sind. Der Umriss des Gegenstands im Röntgenbild entspricht der Silhouette des Gegenstandes aus der jeweiligen Betrachtungsrichtung. Die Betrachtungsrichtung entspricht hier der Durchleuchtungsrichtung des Inspektionsobjekts beim Erzeugen des Röntgenbilds.

Funktional werden bei der Kantenermittlung flächige Bereiche im Röntgenbild voneinander getrennt, die sich ausreichend in Farb- oder Grauwert und/oder Helligkeit und/oder Intensität unterscheiden. Die Linie bzw. Linien zwischen diesen unterscheidbaren Bereichen stellt eine Kante des zu erzeugenden Kantenbilds dar. Aus der Bildverarbeitung sind spezielle Kantendetektionsalgorithmen bekannt, mit denen Übergänge zwischen derartig unterscheidbaren Bereichen erkannt und als Kanten identifiziert werden können. Ein Kantendetektionsalgorithmus berechnet aus einem Röntgenbild das zugehörige Kantenbild. Dabei wird beispielsweise jeder Bildpunkt des Röntgenbilds durch diskrete Faltung mit einer entsprechend eingestellten Filtermatrix neu gesetzt; die Filtermatrix wird auch häufig als Operator des zugehörigen Filteralgorithmus bezeichnet. Der Hauptunterschied bei verschiedenen Kantenfiltern liegt im Wesentlichen in unterschiedlich angepassten Filtermatrizen, wobei auch mehrere verschiedene Filtermatrizen eingesetzt werden können.

Zum Auffinden von Kanten im Röntgenbild kann beispielsweise ein Bildbearbeitungsfilter nach Art des als Canny-Filter bezeichneten Bildverarbeitungsalgorithmus verwendet werden. Der Canny-Filter ist von John Francis Canny in "A Computational Approach to Edge Detection", IEEE Transactions On Pattern Analysis and Machine Intelligence, VOL. PAMI-8, NO. 6, November 1986, beschrieben. Gemäß dem hier vorgeschlagenen Anwendungskontext kann der Canny-Filter auf ein Röntgenbild als digitalisiertes Bild angewendet werden. Selbstverständlich können auch andere bekannte oder zukünftige Bildbearbeitungsalgorithmen verwendet werden, die zur Detektion von Kanten in einem Röntgenbild geeignet sind. D.h., zur Erzeugung eines Kantenbilds aus einem Röntgenbild kann einer oder eine Kombination der folgenden bekannten Kantenoperatoren verwendet werden: Sobel-Operator, Scharr-Operator, Laplace-Operator, Prewitt-Operator, Roberts-Operator, Kirsch-Operator, Marr-Hildreth-Operator.

Einer als Merkmal identifizierten Außenkante kann eine Richtung zugeordnet werden. Die Richtung kann als der Richtungsvektor einer Tangente an die Außenkante an einem jeweils betrachteten Kantenbildpunkt definiert werden. D.h., die zugeordnete Richtung entspricht dann im Wesentlichen einer Verlaufsrichtung der Kante im betrachteten Kantenbildpunkt oder eines Kantenabschnitts der Außenkante. Bevorzugt wird die so ermittelte Richtung unter Berücksichtigung einer für im Röntgenbild enthaltene Gegenstände definierten Umlaufrichtung bestimmt; beispielsweise derart, dass anhand des Richtungsvektors immer eindeutig bestimmbar ist, auf welcher Seite des Richtungsvektors (links oder rechts) der zur Außenkante gehörige Gegenstand liegt. Besonders bevorzugt kann die Richtung derart definiert werden, dass die Richtung aus dem zugehörigen Gegenstand heraus oder in den Gegenstand hinein zeigt; mathematisch entspricht diese Richtungsdefinition der Normalen zur entsprechenden Tangente an dem betrachteten Kantenbildpunkt der Außenkante.

Es ist vorteilhaft, Vorwissen über Kanten von bestimmten Gegenständen in Röntgenbildern zu verwenden, um Kanten nicht interessierender Gegenstände aus dem Kantenbild vor einer weiteren Verarbeitung zu eliminieren. Dazu können beispielsweise markante Punkte und/oder deren Umgebungsbereich im Bereich von aufgefundenen Kanten im Röntgenbild analysiert werden. Die Analyseergebnisse sind bevorzugt geeignet, um zu bestimmen, ob eine aufgefundene Kante zu einem Behältnis gehört oder nicht. Dazu können z.B. in einem Röntgenbild in Bildbereichen der identifizierten Kanten für ausgewählte Bildpunkte Merkmalsdeskriptoren bestimmt werden, die geeignet sind, im Röntgenbild identifizierte Kanten als Außenkanten von Behältnissen zu validieren. Damit können in dem Kantenbild solche Kanten, die wahrscheinlich keine Außenkanten von Behältnissen sind, vor der Bestimmung von Symmetrielinien eliminiert werden. Beispielsweise können in einem Röntgenbild mittels der "skaleninvarianten Merkmalstransformation" (Scale-invariant feature transform, SIFT) Merkmalsdeskriptoren für Bildbereiche für oder um ausgewählte Schlüssel(bild)punkte bestimmt werden. Die SIFT ist ein Algorithmus zur Extraktion lokaler Bildmerkmale aus Abbildungen, der von David G. Lowe an der University of British Columbia im Jahre 1999 veröffentlicht wurde und u. a. im US 6,711,293 B1 oder in David G. Lowe, "Distinctive Image Features from Scale-Invariant Keypoints", International Journal of Computer Vision, 2004 beschrieben ist. Der SIFT-Algorithmus kann auf ein Röntgenbild als digitalisiertes Bild angewendet werden. Der Fachmann für Bildverarbeitung ist in der Lage den bekannten SIFT-Algorithmus zur oben beschriebenen Validierung oder Erkennung von Außenkanten von Behältnissen in Röntgenbildern beispielsweise wie nachstehend beschrieben zu adaptieren.

Die anhand des Kantenbilds bekannten Kanten definieren Objekte, deren Eigenschaften von ihrer Umgebung abweichen und die unempfindlich gegen perspektivische Verzerrung sind. Damit können mithilfe des SIFT-Algorithmus für Bildbereiche des Röntgenbilds in der Umgebung von Kantenbildpunkten Merkmalsdeskriptoren bestimmt werden. Beispielsweise können solche Bildbereiche durch Richtungshistogramme gekennzeichnet werden, deren Merkmale in Vektoren gespeichert werden können. Die so bestimmten Vektoren können quasi wie ein Fingerabdruck zum Vergleich mit Referenzdaten dienen. Die Referenzdaten können beispielsweise mit Röntgenaufnahmen bekannter Gegenstände, besonders Behältnissen, ermittelt werden. D.h., die SIFT-Merkmale können als Deskriptoren zum Zweck der Erkennung von Außenkanten eines Behältnisses verwendet werden. Die erfassten SIFT-Merkmale eignen sich z.B. als Index zu Kantenmodellen mit ähnlichen Merkmalen. Mit anderen Worten können die im Röntgenbild ermittelten Kanten anhand der bestimmten SIFT-Merkmale durch Vergleich mit bekannten Kantenmodellen für Behältniskanten in Röntgenbildern validiert werden. D.h., ein im Röntgenbild für einen Schlüssel(bild)punkt einer Kante ermitteltes SIFT-Merkmal kann mit in einer Datenbank für Behältnisaußenkanten bekannten Merkmalen verglichen werden. Bei hinreichender Übereinstimmung oder Ähnlichkeit kann gefolgert werden, dass es sich bei der bestimmten Kante um eine Außenkante eines Behältnisses handelt.

Zum Vergleichen mit Referenzen kann beispielsweise der RANSAC-Algorithmus (random sample consensus, etwa "Übereinstimmung mit einer zufälligen Stichprobe") verwendet werden, der sich speziell zur Schätzung eines Modells innerhalb einer Reihe von Messwerten mit Ausreißern und groben Fehlern eignet.

Besonders vorteilhaft ist, dass die mittels SIFT extrahierten Merkmale unempfindlich gegenüber Koordinatentransformationen wie Translation, Rotation und Skalierung sind. Die Merkmale sind außerdem robust gegen Beleuchtungsvariation, Bildrauschen und geringere geometrische Deformation höherer Ordnung, wie sie zum Beispiel durch projektive Abbildung eines Gegenstands von verschiedenen Standpunkten im Raum entstehen.

Basierend auf dem aus dem Röntgenbild erzeugten Kantenbild können Paaren von Kantenbildpunkten der Kanten zuordenbare Symmetrielinien detektiert werden.

Bei der Auswertung der identifizierten Kanten im Kantenbild kann es passieren, dass fälschlicherweise eine Symmetrielinie detektiert wird, die zwar tatsächlich zu Kanten von im Röntgenbild enthaltenen Gegenständen passt, diese Kanten jedoch nicht zu demselben Gegenstand, sondern zu verschiedenen Gegenständen gehören. Solche Symmetrielinien werden hier als Pseudosymmetrielinien bezeichnet. Die Ermittlung von Pseudosymmetrielinien sollte so weit wie möglich vermieden werden. Dies ist u. a. ein Aspekt der hier vorgeschlagenen Verbesserungen.

Basierend auf einer erkannten Symmetrielinie kann der zugehörige Gegenstand im Röntgenbild ermittelt werden. Hierzu wird ein zugehöriger symmetrischer Bereich des Gegenstands segmentiert.

Zur Detektion von Symmetrielinien in dem aus dem Röntgenbild erzeugten Kantenbild kann beispielsweise ein Bildverarbeitungsalgorithmus verwendet werden, wie von Li, Zhang und Kleeman in "Real Time Detection and Segmentation of Reflectionally Symmetric Objects in Digital Images", Proceedings of the 2006 IEEE/RSJ, International Conference on Intelligent Robots and Systems, October 9-15, 2006, Beijing, China vorgeschlagen. Zur Meidung von Wiederholungen wird hiermit der Inhalte dieser Veröffentlichung durch Bezugnahme in das vorliegende Dokument übernommen; dies betrifft im Besonderen die Ausführungen hinsichtlich der Grundprinzipien und der Funktionsweise der dort beschriebenen Algorithmen zur Detektion von Symmetrielinien in einem Kantenbild, hinsichtlich der Konstruktion einer Umrisslinie eines zu einer detektierten Symmetrielinie zugehörigen Gegenstands sowie hinsichtlich der Segmentierung von den detektierten Symmetrielinien zuordenbaren symmetrischen Kanten und damit von symmetrischen Bereichen in dem Kantenbild, die von den jeweiligen Kanten umgrenzt sind und Gegenständen mit Symmetrieeigenschaften in dem ursprünglichen Röntgenbild zugeordnet werden können.

Die im Kantenbild segmentierten symmetrischen Bereiche des Röntgenbildes können basierend auf weiteren für die einzelnen Bildpunkte bekannten Informationen, beispielsweise Materialeigenschaften, weiteren Analysen unterworfen werden.

Ein in unterschiedlichen Röntgenbildansichten identifizierter Gegenstand kann nicht anhand der identifizierten Außenkanten validieren werden, da die zum Gegenstand gehörigen Bildbereich meist nicht ähnlich sind. Der Erfinder hat aber erkannt, dass der Gegenstand mittels der in den einzelnen Röntgenbildern identifizierten Symmetrielinien im 3D-Raum validiert werden kann. Eine Symmetrielinie in einem Röntgenbild ist zunächst im 3D-Raum nicht eindeutig bestimmt sondern entspricht im 3D-Raum einer Symmetrieebene. Wenn in wenigstens drei unterschiedlichen Röntgenbildansichten Symmetrielinien desselben Gegenstands ermittelt wurden, können die Symmetrieebenen dieser Symmetrielinien in den dreidimensionalen (3D) Raum projiziert werden. Wenn tatsächlich in allen Röntgenbildern derselbe Gegenstand erkannt wurde, dann werden theoretisch alle Schnittgeraden von jeweils zwei der Symmetrieebenen im 3D-Raum im selben Bereich, d.h. zueinander benachbart liegen. In der Praxis werden die Schnittlinien zumindest in einem bestimmten Toleranzbereich zueinander benachbart liegen und zumindest dieselbe Richtung aufweisen. Somit kann mittels der bestimmten Symmetrielinie der zugehörige Gegenstand im 3D-Raum validiert werden.

Der Erfinder schlägt neben der Anwendung der oben genannten oder funktional ähnlicher Algorithmen auf Röntgenbilder zusätzliche Maßnahmen vor, insbesondere um die Segmentierung der im Röntgenbild enthaltenen Gegenständen mit Symmetrieeigenschaften zu verbessern. Mit den einzelnen Maßnahmen wird erreicht, dass das Verfahren bzw. ein das Verfahren umsetzendes Computerprogramm robuster und/oder schneller arbeitet.

Ein erster Aspekt der Erfindung betrifft somit ein Verfahren zur Detektion eines Gegenstands mit Symmetrieeigenschaften im Inneren eines Inspektionsobjekts basierend auf wenigstens einem Röntgenbild. Wie oben erläutert, eignet sich das Verfahren besonders bevorzugt zum Auffinden von Behältnissen, die Flüssigkeiten enthalten können, wie beispielsweise Flaschen, in Gepäckstücken als Inspektionsobjekt.

Das Verfahren weist bevorzugt die folgenden Schritte auf: (a) Detektion von Kanten von in dem Röntgenbild enthaltenen Gegenständen zur Erzeugung eines Kantenbildes; und (b) Detektion des Gegenstands durch Suchen einer Symmetrielinie, die einem in dem Röntgenbild enthaltenen Gegenstand mit Symmetrieeigenschaften zuordenbar ist, basierend auf zueinander bezüglich der Symmetrielinie symmetrisch angeordneten Paaren von Kantenbildpunkten des Kantenbilds. Im Schritt (b) werden beim Bestimmen der Symmetrielinie im Kantenbild nur solche Kantenbildpunkte berücksichtigt, bezüglich der eine Symmetrielinie eines Gegenstands, zu dem die Kante gehört, in einem dem Gegenstand zuordenbaren Bildbereich des Röntgenbilds liegt.

Der Erfinder hat erkannt, dass basierend auf im Röntgenbild für einzelne Bildpunkte gemessenen Intensitätswerten für nicht vom Inspektionsobjekt absorbierte Röntgenstrahlen bestimmt werden kann, auf welcher Seite einer betrachteten Kante ein Bildbereich des Röntgenbilds zu dem zu der Kante zugehörigen Gegenstand gehört. Im Gegensatz zu herkömmlichen Photographien kann an Kanten von Gegenständen in Röntgenbildern erkannt werden, auf welcher Seite der Kante ein Bildbereich zu einem Gegenstand gehört. Röntgenbilder sind Transmissionsbilder. Daher sind Bereiche des Röntgenbilds, die zu einem Gegenstand gehören, im Vergleich zu dem den Gegenstand umgebenden Bildbereich aufgrund der Absorption der Röntgenstrahlen durch den Gegenstand dunkler. D.h., an diesen Stellen werden aufgrund der Absorption von Röntgenstrahlen durch den Gegenstand geringere Intensitäten bei den detektierten Röntgenstrahlen gemessen. Dieses Vorwissen wird hier verwendet, indem bei der Bestimmung einer Symmetrielinie eine Kanten im Kantenbild nur dann berücksichtigt wird, wenn von der Kante aus betrachtet, die Symmetrielinie tatsächlich in dem Gegenstand, d.h. im dunkleren Bildbereich, liegt, zu dem die betrachtete Kante gehört.

Praktisch kann dies im Algorithmus zum Auffinden einer Symmetrielinie implementiert werden, indem für Kanten und/oder Kantenbildpunkte basierend auf für die einzelnen Bildpunkte des Röntgenbilds bekannten Intensitätsinformationen für die jeweilige Kante und/oder den jeweiligen Kantenbildpunkt ein Richtungsvektor ermittelt und gespeichert wird.

Der Richtungsvektor kann bevorzugt so definiert sein, dass er ausgehend von einer Kante oder einem Kantenbildpunkt in Richtung des Bildbereiches zeigt, in dem der Gegenstand, zu dem die Kante gehört, liegt. Bei der Ermittlung von Symmetrielinie kann der jeweilige Richtungsvektor einer Kante oder eines Kantenbildpunktes als Kriterium verwendet werden, ob der Kantenbildpunkt zu einer bestimmten Symmetrielinie gehören kann oder nicht. Entsprechend der als Beispiel vorgeschlagenen Richtungsvektordefinition bedeutet dies, dass Kanten und/oder Kantenbildpunkte bei der Bestimmung einer Symmetrielinie nur dann berücksichtigt werden, wenn ihre Richtungsvektoren in Richtung dieser Symmetrielinie zeigen bzw. gerichtet sind.

Durch die vorstehend erläuterte Verbesserung kann die Erkennung von Pseudosymmetrielinie halbiert werden.

Bei einer Anwendung des Verfahrens in einer Dual- oder Mehr-Energie-Röntgenprüfanlage, wie beispielsweise aus der DE 101 49 254 A1 bekannt, kann das Verfahren vorteilhaft weitergebildet werden, indem im Schritt (a) das Kantenbild basierend auf einzelnen Bildpunkten des Röntgenbilds zugeordneten Materialinformationen erzeugt wird. Damit kann nach Gegenständen aus unterschiedlichen Materialien, wie beispielsweise Kunststoff und Glas, in getrennten Suchläufen gesucht werden. Mit anderen Worten kann so in Röntgenbildern getrennt nach Flaschen aus unterschiedlichen Materialien, wie z.B. Glas oder Kunststoff, gesucht werden. Beispielsweise können bei Röntgenbildern, die mittels eines Zwei- oder Dual-Energie-Röntgenverfahrens erzeugt wurden, einzelne Bildpunkte (Pixel) des Röntgenbildes entsprechend einer für diesen Ort bestimmten effektiven Kernladungszahl (Zeff) des durchstrahlten Materials unterschieden werden. Typischerweise liegt Zeff für Glas im Bereich von 12 bis 13 und für Kunststoffe im Bereich von 6 bis 7.

Vor einer weiteren Verarbeitung des Kantenbildes können die dort identifizierten Kanten dahingehend validiert werden, ob es sich tatsächlich um Außenkanten von Gegenständen handelt. Hierzu kann beispielsweise wenigstens ein Merkmalsdeskriptor für wenigstens einen Bildbereich in der Umgebung eines ausgewählten Kantenbildpunkts im Transmissionsbild bestimmt werden. Der wenigstens eine Merkmalsdeskriptor kann beispielsweise basierend auf der oben beschriebenen skaleninvarianten Merkmalstransformation (SIFT) des Bildbereichs bestimmt werden. Anschließend kann der wenigstens eine Merkmalsdeskriptor mit vorbekannten Referenzwerten verglichen werden. Damit kann der ausgewählten Kantenbildpunkt als eine Außenkante eines Behältnisses validiert werden. Zum Beispiel können in dem Kantenbild solche Kanten gelöscht oder entsprechend gewichtet werden, die wahrscheinlich keine Außenkanten von Behältnissen sind. Solche Kanten werden dann bei der nachfolgenden Bestimmung von Symmetrielinien nicht mehr berücksichtigt.

Zur Auffindung möglicher Symmetrielinien im Kantenbild kann, wie beispielweise bei dem bekannten Algorithmus von Li, Zhang und Kleeman, das Kantenbild schrittweise über einen vorbestimmten Winkelbereich von 0 bis π (0 bis 180°) gedreht werden, um in dem gedrehten Kantenbild eine Symmetrielinie aufzufinden, die im jeweiligen Drehwinkel Θ gegenüber einer der Bildaußenkanten verläuft. Mit anderen Worten wird jeweils nach einer im gedrehten Bild senkrecht verlaufenden Symmetrielinie gesucht. Dazu kann im Schritt (b) das Kantenbild schrittweise, bevorzugt in äquidistanten Schritten, über den vorbestimmten Winkelbereich gedreht werden. Im gedrehten Kantenbild werden basierend auf aufgrund einer Symmetrieeigenschaft eines Gegenstands entsprechend für zueinander symmetrisch liegende Kanten bzw. Kantenbildpunkte zuordenbare Symmetrielinien bestimmt.

Gemäß einer vorteilhaften Weiterbildung wird vorgeschlagen, für jeden Drehwinkel Θ jeweils solche Kantenbildpunkte unberücksichtigt zu lassen, d.h. nicht zur Bestimmung einer Symmetrielinie heranzuziehen, die im gedrehten Kantenbild einer Kanten angehören, die zu einer Symmetrielinie orthogonal oder annähernd orthogonal verläuft. Dies reduziert ebenfalls das Auffinden von Pseudosymmetrielinien als auch Rechenaufwand für den Algorithmus.

Besonders Flaschen als aufzufindende Gegenstände weisen sehr häufig aus annähernd jeder Betrachtungsrichtung einen Umriss auf, der sich zu großen Teilen aus geradlinigen Kantenabschnitten zusammensetzt. Das Verfahren zum Auffinden einer Symmetrielinie kann damit verbessert werden, indem für jede näherungsweise geradlinige Kante im Kantenbild ein Kantenrichtungsvektor ermittelt und für die zugehörigen Kantenbildpunkte der zugehörigen Kante gespeichert wird. Beim Bestimmen einer Symmetrielinie werden bevorzugt nur Kantenbildpunkte von solchen Kantenpaaren berücksichtigt, die zueinander bezüglich dieser Symmetrielinie symmetrisch verlaufen. D.h., mittels der für die Kantenbildpunkte gespeicherten Kantenrichtungsvektoren kann für ein möglicherweise zu einer betrachteten Symmetrielinie liegendes Kantenbildpunktpaar eine Plausibilitätsprüfung durchgeführt werden. Wenn die Überprüfung ergibt, dass die betrachteten Kantentrichtungsvektoren in Bezug auf die vermeintliche Symmetrielinie nicht symmetrisch zueinander verlaufen, werden diese Kantenbildpunkte bei der Bestimmung der betrachteten Symmetrielinie nicht berücksichtigt.

Der Kantenrichtungsvektor und der oben genannte Richtungsvektor zur Identifikation des einem Gegenstand zugehörigen Bildbereichs sind orthogonal zueinander. D.h., die in den beiden Vektoren enthaltenen Richtungsinformationen sind redundant. Damit kann es ausreichen nur jeweils einen der beiden Vektoren zu bestimmten und abzuspeichern.

Entsprechend dem von Li, Zhang und Kleeman vorgeschlagenen Verfahren zum Auffinden symmetrischer Gegenstände in digitalen Bildern kann ein Gegenstand mit Symmetrieeigenschaften im Kantenbild basierend auf der zugeordneten Symmetrielinie segmentiert werden, indem für den Gegenstand eine Umrisslinie bestimmt wird. Da bekannt ist, dass eine aufgefundene Symmetrielinie zu einem Gegenstand mit einer Symmetrieeigenschaft gehört, kann als Umrisslinie eine Konturlinie ermittelt werden, die zur gefundenen Symmetrielinie symmetrisch ist. Die Umrisslinie grenzt den Gegenstand von seiner Umgebung ab. Die Umrisslinie kann basierend auf den Kanten bestimmt werden, denen dieselbe Symmetrielinie zugeordnet wurde.

Zur Identifikation von Kantenbildpunkten, die wahrscheinlich Umrisslinienbildpunkte sind, können Kantenbildpunkte, die in Bezug auf die Symmetrielinie zueinander symmetrisch liegen, gewichtet werden. Die Gewichtung kann unter Berücksichtigung eines jeweiligen Abstands zweier einander bezüglich der Symmetrielinie zuordenbarer Kantenlinienpunkte und eines Abstandes des Mittelpunktes einer Verbindungsgeraden der beiden Kantenlinienpunkte von der Symmetrielinie erfolgen. Basierend auf den derartig mit Gewichten bewerteten Kantenbildpunkten kann schließlich in einem Rückverfolgungsverfahren die Umrisslinie konstruiert werden, wobei die jeweiligen den Kantenbildpunkten zugeordneten Gewichte berücksichtigt werden.

Besonders bei Röntgenbildern von Gepäckstücken, in denen viele Gegenstände durcheinander enthalten sind, können sich Gegenstände im Röntgenbild überlagern. Dies führt dazu, dass Kanten und Bereiche von Gegenständen teilweise im Röntgenbild in einander übergehen und damit schwerer unterscheidbar sind. Besonders problematisch ist hier, dass sich die Umrisslinie einzelner Gegenstände, insbesondere aus ähnlichen Materialien, bei Überdeckungen im Röntgenbild nicht mehr durch einen hohen Kontrastunterschied erkennen lässt. In den zugehörigen Kantenbildern fehlen daher Außenkanten von sich überdeckenden Gegenständen im Überdeckungsbereich.

In einer vorteilhaften Weiterbildung weist daher das erfindungsgemäße Verfahren zusätzlich einen Schritt (c) zum Segmentieren eines Gegenstands mit Symmetrieeigenschaften in dem Kantenbild basierend auf der zugeordneten Symmetrielinie auf, wobei eine Umrisslinie für den Gegenstand bestimmt wird, die den Gegenstand von seiner Umgebung abgrenzt. Im Schritt (c) werden bevorzugt bei zwei zu einer Symmetrieline als symmetrisch bestimmten Kanten einer der Kanten fehlende Kantenbildpunkte spiegelsymmetrisch zur Symmetrielinie unter Berücksichtigung der jeweils anderen Kante ergänzt. Mit anderen Worten wird die Lücke spiegelsymmetrisch zur Symmetrielinie entsprechend dem Verlauf der anderen Kante geschlossen. Damit können Lücken in Kanten der Umrisslinie geschlossen werden, die in einem Überdeckungsbereich liegen.

Der Überdeckungsbereich, in dem der Gegenstand und die Kante des Gegenstands teilweise von einem anderen Gegenstand überdeckt sind, kann basierend auf für dem Überdeckungsbereich zugehörige Bildpunkte gemessenen Röntgenstrahlenintensitäten bestimmt werden. Überdeckungsbereiche in Röntgenbildern zeichnen sich dadurch aus, dass dort geringere Intensitätswerte für Röntgenstrahlen gemessen werden als in den Bildbereichen der einzelnen Gegenstände ohne die Überdeckung. D.h., Überdeckungsbereiche sind in Röntgenbildern ebenfalls dunkler als nicht überdeckte Bereiche. Zusätzlich kommt es bei Röntgenbildern nicht darauf an, dass der überdeckende Gegenstand vor dem überdeckten Gegenstand liegt, er kann auch dahinter liegen. Dies führt zu derselben Darstellung im Röntgenbild.

Mittels dieser Maßnahme wird es ermöglicht, teilverdeckte Gegenstände mit Symmetrieeigenschaft besser zu segmentieren.

In einer weiteren vorteilhaften Weiterbildung des Verfahrens wird jeweils eine Symmetrielinie für einen bestimmten Gegenstand mit Symmetrieeigenschaften in wenigstens drei Röntgenbildern desselben Inspektionsobjekts aus jeweils verschiedenen Durchstrahlungsrichtungen bestimmt. Das Verfahren kann dann weiter aufweisen: (d) Projizieren der gefundenen Symmetrielinien der einzelnen Röntgenbildern als Symmetrieebenen in einen dreidimensionalen (3D) Raum durch Projektion in einen 3D-Raum und Überprüfen der Lage von Schnittgeraden der Symmetrieebenen im 3D-Raum zueinander. D.h., die Symmetrieeigenschaft des Gegenstands kann über die gefundenen Symmetrielinien validiert werden. Dazu wird überprüft, ob die Schnittgeraden der Symmetrieebenen im 3D-Raum innerhalb eines bestimmten Toleranzbereiches, bevorzugt im Bildbereich des Gegenstands, annähernd dieselbe Richtung aufweisen und zueinander benachbart sind. D.h., es wird geprüft, ob die Schnittgeraden näherungsweise parallel zu einander sind und einen Abstand aufweisen, der einen vorbestimmten Wert nicht überschreitet.

Besonders geeignet ist das Verfahren zur Detektion von Flaschen als der Gegenstand mit Symmetrieeigenschaften, beispielsweise in einem Gepäckstück als ein Inspektionsobjekt. Beim Auffinden von Flaschen in einem Röntgenbild kann daher zunächst nach einer Flasche zuordenbaren Symmetrielinien in dem Röntgenbild gesucht werden. Wenn eine Symmetrielinie gefunden wurde, kann ein zu der Flasche gehöriger symmetrischer Bereich in dem Röntgenbild segmentiert werden. Wenn mehre Röntgenbilder desselben Objekts aus verschiedenen Blickrichtungen zur Verfügung stehen, können die Symmetrielinien und damit die Flasche im dreidimensionalen Raum validiert werden.

In einer Weiterbildung werden bei dem Verfahren in einem Schritt (e) in den jeweiligen Röntgenbildern ein Boden der Flasche und ein Hals der Flasche bestimmt. Dies ist beispielsweise bei Flaschen dadurch möglich, weil der Boden üblicherweise breiter als der Flaschenhals ist. D.h., der breite Boden und der im Vergleich zum Boden dünne Hals können erkannt werden. Durch die Detektion des Flaschenbodens und des Flaschenhalses kann der Symmetrielinie der Flasche eindeutig eine Richtung zugeordnet werden. Diese Richtungsinformation kann zusätzlich bei der Validierung der Symmetrielinie im 3D-Raum genutzt werden.

In einer weiteren vorteilhaften Weiterbildung weist das erfindungsgemäße Verfahren einen Schritt (f) auf, in dem auf einen Inhalt eines Gegenstands mit Symmetrieeigenschaften unter Berücksichtigung des Außenmaterials des Gegenstands geschlossen wird. Wie oben erläutert, kann anhand einer Röntgeninspektion mit Röntgenstrahlen zweier Energieniveaus bzw. einer entsprechenden Auswertung des Transmissionsspektrums nach zwei unterschiedlichen Energieniveaus, beispielsweise für jeden Bildpunkt ein zuordenbarer Wert der effektiven Kernladungszahl bestimmt werden.

Ein zweiter Aspekt der Erfindung betrifft ein Computersystem als Bildverarbeitungsvorrichtung mit wenigstens einem Prozessor, der zur Ausführung eines der vorstehend beschriebenen Verfahren zur Detektion eines Gegenstands mit wenigstens einer Symmetrieeigenschaft im Inneren eines Inspektionsobjekts basierend auf wenigstens einem Röntgenbild oder mehreren Röntgenbildern des Inspektionsobjekts gemäß einem der vorstehenden Verfahren eingerichtet ist.

Ein dritter Aspekt der Erfindung betrifft eine Röntgenprüfanlage mit einer durch einen Strahlentunnel führenden Transporteinrichtung und um die Transporteinrichtung angeordnete Röntgenstrahlenquellen, die Röntgenstrahlen in zumindest zwei unterschiedlichen Strahlenebenen abgeben, auf die jeweils eine zugeordnete Detektoranordnung ausgerichtet ist, wobei die Röntgenprüfanlage ein vorstehendes Computersystem aufweist oder mit einem solchen Computersystem betriebsmäßig verbunden ist.

Ein weiterer Aspekt der Erfindung betrifft ein Computerprogramm oder Computerprogrammprodukt mit Programmcode zur Durchführung eines der oben beschriebenen erfindungsgemäßen Verfahren, sobald das Computerprogramm in einem Computersystem ausgeführt wird. Mit anderen Worten betrifft die Erfindung auch Softwaremittel zur Implementierung eines der oben beschriebenen Verfahren auf einem Computersystem. Ein weiterer Aspekt der Erfindung betrifft einen Datenträger mit dem darauf elektronisch lesbar gespeicherten Programmcode des vorstehend genannten Computerprogramms. Mit anderen Worten betrifft die Erfindung auch einen Datenträger mit den darauf gespeicherten Softwaremitteln zur Implementierung eines der oben beschriebenen Verfahren auf einem Computersystem. Ein weiterer Aspekt der Erfindung betrifft einen Datenstrom, der den Programmcode des vorstehend genannten Computerprogramms enthält. Mit anderen Worten betrifft die Erfindung auch Softwaremittel in einer zwischen Computersystemen drahtgebunden oder drahtlos übertragbarer Form.

Hinsichtlich des Computerprogramms, des Datenträgers sowie des Datenstroms sei angemerkt, dass es sich bei dem Computersystem zur Implementierung der Bildverarbeitungsvorrichtung um einen handelsüblichen Computer, wie beispielsweise eine Workstation oder ein Laptop, der betriebsmäßig mit einer Röntgeninspektionsanlage verbunden ist oder verbunden werden kann, oder eine auf Bildverarbeitung spezialisierte in eine Röntgeninspektionsanlage integriertes Computersystem handeln kann.

Der Computer oder die Recheneinheit sind in bekannter Weise entweder mit einem Standardbetriebssystem als Programmumgebung für das Ausführen von Computerprogrammen oder mit einer proprietären Programmierumgebung für speziell daran angepassten Programmcode oder Softwaremittel ausgestattet. Das Computersystem kann einen Festwertspeicher (Nur-Lese-Speicher) für grundlegende programmtechnische Funktionen des Systems sowie einen flüchtigen Speicher (Schreib-Lese-Speicher) für Programmcode eines in das System geladenen Computerprogramms und/oder bei der Ausführung des Computerprogramms benötigter oder erzeugter Arbeitsdaten aufweisen. Der Programmcode eines in das System geladenen Computerprogramms kann auch in einem Festwertspeicher abgelegt sein. Weiter kann das Computersystem wenigstens eine programmierbare Recheneinheit, wie einen oder mehrere Mikroprozessor(en) oder dergleichen aufweisen. Die programmierbare Recheneinheit führt mittels des Programmcodes programmierte Anweisungen eines Computerprogramms aus, um ein mittels des Computerprogramms programmiertes Verfahren, wie z.B. eines der hier beschriebenen Verfahren, umzusetzen. Weiter kann das Computersystem Schnittstellen für die Dateneingabe und Datenausgabe aufweisen. Hierzu gehört besonders die Möglichkeit Programmcode von einem Datenträger oder als Datenstrom aus einem Computernetz, wie einem lokalen Computernetz, dem Internet oder dergleichen, in das Computersystem laden zu können.

Die Erfindung eignet sich besonders zur Verwendung in Bildverarbeitungsvorrichtungen in bzw. in Verbindung mit einer Röntgenprüfanlage, wie sie an Sicherheitsüberprüfungsstellen zur Sicherheitskontrolle von Flugpassagieren oder im Gepäckumschlagsystem, beispielsweise an Flughäfen, eingesetzt werden. Dabei werden Gepäckstücke und/oder Frachtgüter als Inspektionsobjekte, die an Bord eines Flugzeugs verbracht werden sollen, automatisch zerstörungsfrei inspiziert. Derartige Röntgenprüfanlagen können auch an anderen Kontrollstellen z.B. an Zugängen zu sicherheitsrelevanten Bereichen oder Gebäuden, an Grenzkontrollstellen etc. zur Inspektion von Objekten, wie von Personen mitgeführtes Handgepäck oder Poststücke wie Briefe, Päckchen und Pakete verwendet werden. Ziel derartiger Inspektionen kann die Entdeckung bestimmter Gegenstände, wie beispielsweise Datenträger, wie DVDs oder CD-ROMs, oder Stoffe, wie beispielsweise Drogen, aber auch die Detektion von Materialen und Substanzen mit Gefährdungspotenzial, wie Sprengstoffe oder Chemikalien, sein. Die vorstehenden Gegenstände können selbst Symmetrieeigenschaften aufweisen bzw. können die vorstehenden Gegenstände, Stoffe, Materialien und Substanzen auch in Behältnissen verborgen sein, die Symmetrieeigenschaften ausweisen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.
- Figuren 1 und 2: zeigen ein erstes Beispiel für ein Röntgenbild eines ersten Gepäckstücks und ein zugehöriges Kantenbild.
- Figuren 3 und 4: zeigen ein zweites Beispiel für ein Röntgenbild eines ersten Gepäckstücks und ein zugehöriges Kantenbild.
- Figur 5: zeigt ein schematisches Blockdiagramm einer Röntgenprüfanlage mit einer Bildverarbeitungsvorrichtung zur Durchführung eines der vorgeschlagenen Verfahren zur Detektion von Gegenständen mit Symmetrieeigenschaften in Röntgenbildern.
- Figur 6: zeigt ein schematisches Blockdiagramm der Bildverarbeitungsvorrichtung der Röntgenprüfanlage der Figur 10.
- Figur 7: veranschaulicht ein Grundprinzip zum Auffinden von Symmetrielinien in einem Kantenbild.
- Figur 8 und 9: veranschaulichen anhand eines vereinfachten Röntgenbilds sowie des zugehörigen Kantenbilds Verbesserungsaspekte zur Vermeidung des Auffindens von Pseudosymmetrielinien.
- Figur 10 und 11: veranschaulichen anhand eines vereinfachten Röntgenbilds sowie des zugehörigen Kantenbilds eine Verbesserung bei der Segmentierung von Gegenständen im Kantenbild bei sich im Röntgenbild überdeckenden Gegenständen.
- Figur 12 bis 14: zeigen jeweils ein Röntgenbild des ersten Gepäckstücks der Figur 1 aus unterschiedlichen Blickrichtungen, wobei in jedes der Röntgenbild für eine Flasche als zugehörig erkannte Kanten sowie die erkannte Symmetrielinie eingezeichnet sind.

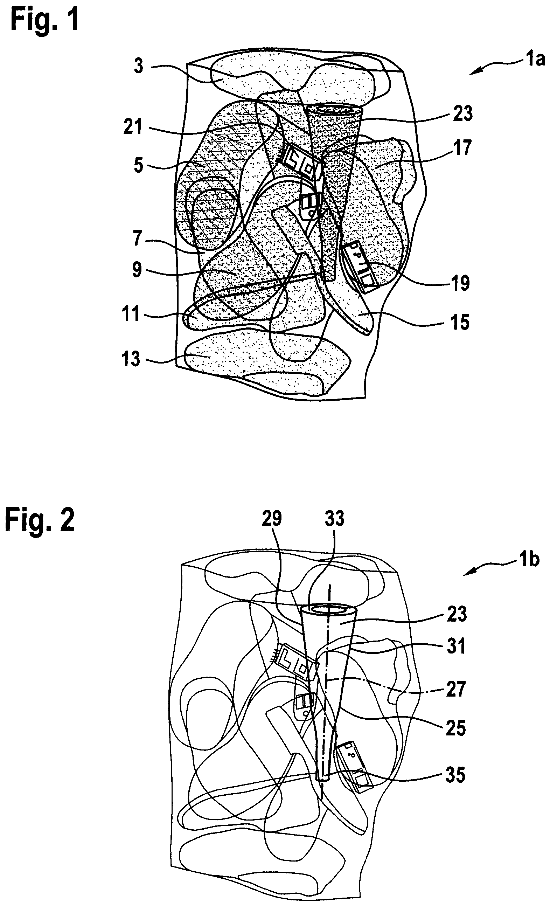

Es sei angemerkt, dass die Abbildung der Figuren 1, 3, 6 und 7 bis 8 wurden für eine S/W-Reproduzierbarkeit mittels eines Floyd-Steinberg-Dithering-Algorithmus angepasst, d.h., es handelt sich um schematische Darstellungen von Röntgenbildern zur Erläuterung.

Begriffe "gekoppelt" und "verbunden/angeschlossen" sowie davon abgeleitete Begriffe werden hier nicht synonym verwendet. "Verbunden/angeschlossen" deutet an, dass zwei oder mehre Elemente in direktem physischem oder elektrischem Kontakt miteinander stehen. "Gekoppelt" bedeutet, dass zwei oder mehre Elemente zusammenwirken oder sich gegenseitig beeinflussen, wobei sie in direktem, aber auch indirektem physischem oder elektrischem Kontakt miteinander stehen können. Falls nicht anderweitig angegeben, deutet der Gebrauch der Ordinaladjektive "erster", "zweiter", "dritter" usw. zur Bezeichnung eines gemeinsamen Objekts lediglich an, dass auf verschiedene Beispiele von gleichartigen Objekten Bezug genommen wird, und soll nicht implizieren, dass die so bezeichneten Objekte in einer gewissen zeitlichen, räumlichen, Rangordnungs- oder sonstigen Reihenfolge auftreten müssen.

Figur 1 zeigt ein Beispiel eines Röntgenbilds 1a eines ersten Gepäckstücks in Form einer Tasche. In dem Röntgenbild 1a sind für einen menschlichen Betrachter ohne weiteres einzelne Gegenstände erkennbar und identifizierbar. So sind in dem mittels Röntgenstrahlen durchleuchteten ersten Gepäckstück u.a. mehrere Schuhe 3, 5, 7, 9, 11, 13, 15, 17 sowie elektronische Geräte 19, 21 erkennbar. Unter den Gegenständen befindet sich auch eine Flasche 23.

Wie eingangs erwähnt, stellen besonders Flaschen in sicherheitsrelevanten Bereichen ein Gefährdungsrisiko dar, da sie nicht deklarierte Substanzen wie Flüssigkeiten, Gels, Cremes etc. beinhalten können. Daher ist beispielsweise die Mitnahme von flüssigen, gelförmigen oder cremeförmigen Substanzen im Handgepäck an Bord eines Flugzeuges mittlerweile starke beschränkt oder verboten. Entsprechend sollen solche Behältnisse bei Sicherheitskontrollen zuverlässig erkannt werden können.

Eine Röntgenprüfanlage, wie sie zur Gepäckkontrolle üblicherweise an Flughäfen eingesetzt wird, zeigt ein oder mehrere Röntgenbilder eines Inspektionsobjekts, wie einem Handgepäckstück, auf einer Anzeigeeinrichtung an. Anwesendes Sicherheitspersonal muss dann anhand des oder der Röntgenbildern in kurzer Zeit zuverlässig erkennen, ob sich darin ein sicherheitsrelevanter Gegenstand befindet. Besonders vorteilhaft ist es, wenn die Röntgenprüfanlage sicherheitskritische Gegenstände in Gepäckstücken, beispielsweise Behältnisse, insbesondere Flaschen, automatisch hinsichtlich eines möglichen Sicherheitsrisikos analysieren und bewerten kann. Ein als unbedenklich eingestuftes Behältnis kann dann für den Bediener entsprechend gekennzeichnet werden, sodass dieser erkennt, dass keine weitere, besonders keine aufwändige manuelle Sichtprüfung erforderlich ist.

Figur 2 zeigt ein basierend auf dem Röntgenbild der Figur 1 erzeugtes Kantenbild 1b. Das Kantenbild 1b wurde mittels eines Algorithmus zum Auffinden von Kanten in einem Bild, wie dem eingangs genannten Canny-Filter erzeugt. Dabei wurde zusätzlich basierend auf für einzelne Bildpunkte bekannten Materialinformationen, wie beispielsweise der effektiven Kernladungszahl (Zeff), die Kantensuche auf Gegenstände aus Glas beschränkt. Es sei angemerkt, dass auch andere für einzelne Bildpunkte bekannte Materialinformationen - falls bekannt - berücksichtigt werden können; dies kann beispielsweise ein Massenschwächungskoeffizient und/oder die spezifische Dichte sein. Alternativ oder zusätzlich können andere Merkmale, die geeignet sind Außenkanten von Behältnissen, insbesondere Flaschen, zu identifizieren genutzt werden. Beispielsweise können mittels des Eingangs diskutierten SIFT-Algorithmus im Röntgenbild im Bildbereich markanter Bildpunkte Merkmalsdeskriptoren bestimmt werden. Beispielsweise kann an ausgewählten Kantenbildpunkten identifizierter Kanten die Umgebung in einer skalierungs- und rotationsinvarianten Form erfasst werden. Anhand der so erfassten SIFT-Merkmale kann die im Röntgenbild ermittelte Kante durch Vergleich mit bekannten Kantenmodellen für Behältniskanten in Röntgenbildern validiert werden. Wird dabei festgestellt, dass es sich mit einer bestimmten Wahrscheinlichkeit nicht um eine Außenkante eines Behältnis handelt, kann die zugehörige Kante im Kantenbild gelöscht werden oder bei weiteren Analysen unberücksichtigt bleiben.

In dem Kantenbild 1b der Figur 2 ist eine Umrisslinie 25 der Flasche 23 für einen menschlichen Betrachter bereits gut zu erkennen. Für eine Maschine besteht das Problem, zu erkennen, dass die Kanten, welche die Umrisslinie 25 bilden, zu einem Gegenstand gehören, um diesen Gegenstand segmentieren zu können.

Gemäß der hier vorgeschlagenen Lösung können bestimmte Gegenstände anhand von Symmetrieeigenschaften besser identifiziert werden. Die Flasche 23 zeichnet sich beispielsweise durch Symmetrieeigenschaften bezüglich einer Symmetrielinie 27 aus, die es aufzufinden gilt.

Die Umrisslinie 25 der Flasche 23 besitzt zwei zueinander symmetrisch verlaufende Seitenkanten 29 und 31. Daher können diese Seitenkanten 29, 31 bei Kenntnis der Symmetrielinie 27 leichter der Flasche 23 zugeordnet werden. Weiter sind ein Boden 33 der Flasche 23 und ein Hals 35 der Flasche zu erkennen. Der Boden 33 der Flasche 23 ist typischer Weise breiter als der Hals 35 der Flasche 23.

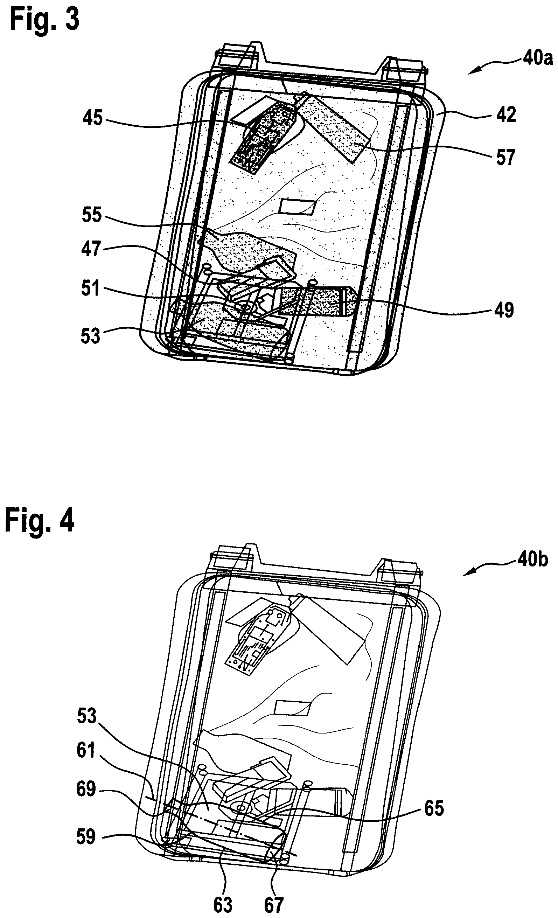

Figur 3 zeigt ein weiteres Beispiel eines Röntgenbilds 40a eines zweiten Gepäckstücks 42, bei dem es sich um einen Koffer handelt. In dem Röntgenbild 40a sind für einen menschlichen Betrachter wieder einzelne Gegenstände erkennbar und identifizierbar. Beispielsweise sind in dem mittels Röntgenstrahlen durchleuchteten zweiten Gepäckstück 42 u.a. mehrere elektronische Geräte 45, 47, 49, 51 enthalten. Unter den Gegenständen befinden sich auch Flaschen 53, 55, 57.

Figur 4 zeigt ein basierend auf dem Röntgenbild 40a der Figur 3 erzeugtes Kantenbild 40b. Das Kantenbild 40b wurde mittels Canny-Filter erzeugt. Ebenfalls wurde wie bei der Figur 2 basierend auf für die einzelnen Bildpunkte bekannten Materialinformationen die Kantensuche auf Gegenstände aus dem Glas beschränkt.

Im Kantenbild 40b der Figur 4 ist für einen menschlichen Betrachter eine Umrisslinie 59 der Flasche 53 gut zu erkennen. Die Flasche 53 zeichnet sich wie beim Beispiel der Figuren 1 und 2 durch Symmetrieeigenschaften bezüglich einer Symmetrielinie 61 aus, die es aufzufinden gilt. Die Umrisslinie 59 der Flasche 53 besitzt zwei zueinander symmetrisch verlaufende Seitenkanten 63 und 65. Weiter sind ein breiter Boden 67 der Flasche 53 und ein dünner Hals 69 der Flasche 53 zu erkennen.

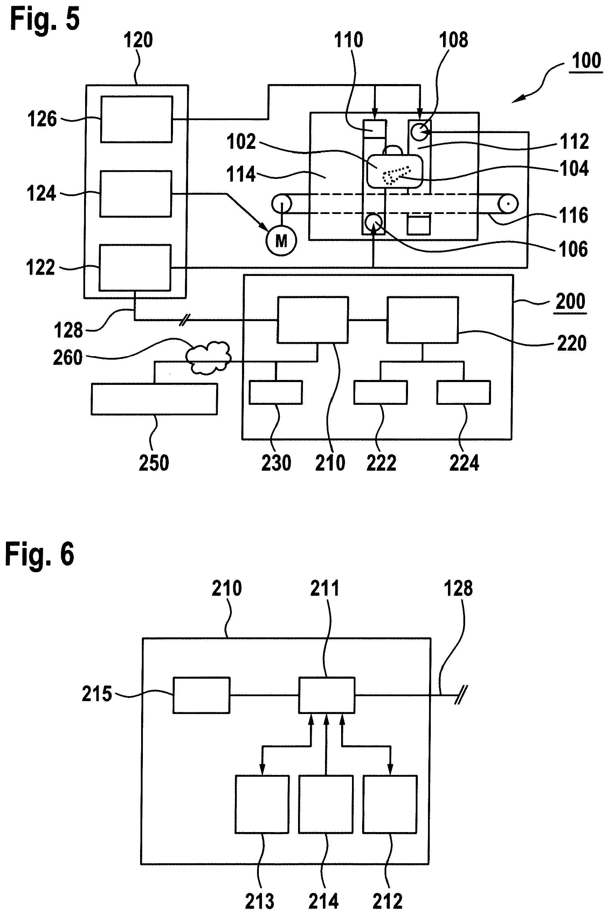

Vor der Diskussion der einzelnen vorgeschlagenen Maßnahmen zum bessern Auffinden von Gegenständen mit Symmetrieeigenschaften in Röntgenbildern, sei zunächst kurz anhand der Figuren 5 kurz eine Röntgenprüfanlage 100 erläutert. Mittels der Röntgenprüfanlage 100 können zu verarbeitende Röntgenbilder von Inspektionsobjekten erzeugt werden. Figur 6 zeigt ein schematisches Blockdiagram einer Bildverarbeitungsvorrichtung 210, die Teil der Röntgenprüfanlage der Figur 5 sein kann oder alternativ mit dieser betriebsmäßig gekoppelt sein kann. Beispielsweise ist die Bildverarbeitungsvorrichtung 210 über eine drahtgebundene oder drahtlose Datenverbindung, gekoppelt und programmiertechnisch zur Ausführung eines der hier vorgeschlagenen Verfahren konfiguriert.

Figur 5 zeigt schematisch eine Inspektionsvorrichtung in Form der Röntgenprüfanlage 100, die zur Sicherheitsüberprüfung von Inspektionsobjekten 102, wie beispielsweise Gepäckstücke der Bilder der Figuren 1 bis 4, dient. Derartige Inspektionen werden regelmäßig auf Flughäfen durchgeführt. Ziel ist es, in Gepäckstücken befindliche Gegenstände 104 zu identifizieren, um sie hinsichtlich ihres möglichen Sicherheitsrisikos zu bewerten und falls angezeigt, näher zu untersuchen. Mittels eines der hier vorgeschlagenen Verfahren zur Detektion von Gegenständen mit Symmetrieeigenschaften in Röntgenbildern, ist die Röntgenprüfanlage 100 hinsichtlich der Erkennung von Flaschen in Gepäckstücken verbessert.

Die schematisch dargestellte Röntgenprüfanlage 100 der Figur 5 enthält im Wesentlichen mehrere ortsfeste Röntgenstrahler 106, 108 als Strahlenquellen und zugeordnete Detektoranordnungen 110, 112. Die Detektoranordnungen 110, 112 sind eingerichtet, Intensitäten nicht absorbierter Röntgenstrahlen zu messen. Die Strahlenquellen geben Röntgenstrahlen in einem Energiebereich bis maximal 160 keV ab. Zur Vereinfachung sind in der Figur 5 nur zwei Strahlenquellen und deren zugeordnete L-förmigen Linienscanner als Detektoreinrichtungen gezeigt.

Die Röntgenstrahler 106, 108 sind so angeordnet, dass das Inspektionsobjekt 102 jeweils in verschiedenen Richtungen durchleuchtet wird. Damit werden voneinander unabhängige Daten über das Objekt 102 erhalten. Dazu sind die Röntgenstrahler 106, 108 in Transportrichtung des Objekts 102 zueinander beabstandet an verschiedenen Stellen seitlich eines Strahlentunnels 114 angeordnet. Durch den Strahlentunnel 114 wird das Objekt 102 von einer Transporteinrichtung, vorzugsweise einem Bandförderer 116, transportiert. Selbstverständlich können mehr als die zwei Röntgenstrahler 106, 108 sowie entsprechend mehr als die zwei Detektoranordnungen 110, 112, wie beispielsweise in der DE 101 49 254 A1 gezeigt, zur Erzeugung von mehr als zwei Röntgenbildern aus unterschiedlichen Blickrichtungen, d.h. verschiedener Ansichten, des zu inspizierenden Objekts (Inspektionsobjekt) 102 vorhanden sein.

In der als Beispiel dargestellten Röntgenprüfanlage 100 der Figur 5 werden von den Röntgenstrahlern 106, 108 jeweils Röntgenstrahlen in zwei, bevorzugt fächerförmigen, Strahlenebenen zur Durchleuchtung des Inspektionsobjekts 102 abgegeben. Auf jede der Strahlenebenen ist jeweils eine zugeordnete Detektoranordnung 110, 112 ausgerichtet. Somit wird das Objekt 102 in zumindest zwei getrennten Strahlenebenen, die parallel zueinander ausgerichtet sind, durchleuchtet. Es ist grundsätzlich auch möglich, dass die Strahlenebenen nicht parallel zueinander ausgerichtet sind. Jedenfalls sind die jeweiligen Richtungen, in denen das Inspektionsobjekt 102 durchstrahlt wird, bekannt und können bei Analysen, in denen die Informationen der beiden mittels der Detektoranordnungen 110,112 erfassten Röntgenbilder ausgewertet werden, berücksichtigt werden.

Die Detektoranordnungen 110, 112 enthalten jeweils Detektoren in einer zeilenförmigen Anordnung, die bevorzugt L-förmig gestaltet ist. Dadurch können bei geringem Platzbedarf für die Detektoranordnungen alle das Objekt 102 durchdringenden Strahlen detektiert werden. Die Detektoranordnungen 110, 112 enthalten Doppeldetektoren, die eingerichtet sind, bei einem grundsätzlich bekannten Mehrenergie- bzw. Dual-Energy-Verfahren die Intensitäten der Röntgenstrahlen getrennt nach hohen und niedrigen Energien messen.

Die Röntgenprüfanlage 100 weist weiter eine Steuereinrichtung 120 auf, die betriebsmäßig mit einer Auswerteeinrichtung 200 gekoppelt ist. Die Steuereinrichtung 120 enthält eine Röntgensteuereinheit 122, die betriebsmäßig mit den Röntgenstrahlern 106, 108 gekoppelt ist und eingerichtet ist, diese zu steuern. Die Steuereinrichtung 120 enthält weiter eine Transportsteuereinheit 124, die betriebsmäßig mit dem Bandförderer 116 als Transporteinrichtung gekoppelt ist und eingerichtet ist, diese für einen bevorzugt gleichmäßigen Transport des Objekts 102 durch die Röntgenprüfanlage 100 zu steuern. Weiter enthält die Steuereinrichtung 120 eine Detektordatenerfassungseinheit 126, die mit den Detektoranordnungen 110, 112 betriebsmäßig gekoppelt ist und eigerichtet ist, die von den Detektoranordnungen 110, 112 gemessenen Intensitätswerte der das Objekt 102 durchlaufenen Röntgenstrahlen zu erfassen. Die Steuereinrichtung 120 selbst koordiniert die Steueraufgaben der Einheiten 122, 124, 126 und stellt über eine Datenverbindung 128 die von der Detektordatenerfassungseinheit 126 erfassten Intensitätsdaten zur weiteren Verarbeitung an eine Auswerteeinrichtung 200 zur Verfügung.

Die Auswerteeinrichtung 200 weist eine Bildverarbeitungsvorrichtung 210 und einer Bildgebungseinrichtung 220 mit einem Bildschirm 222 und ggf. einem Drucker 224 auf, mittels derer die basierend auf den erfassten Intensitätswerten erzeugten Röntgenbilder des Objekts 102 und der darin befindlichen Gegenstände 104 für die visuelle Prüfung durch eine Bedienperson angezeigt werden.

In einer mit der Bildverarbeitungsvorrichtung 210 gekoppelten Datenbank 230 sind beispielsweise Werte zumindest einer spezifischen, die Absorption von Röntgenstrahlen beeinflussenden Größe verschiedener Materialien hinterlegt, sodass deren Anwesenheit detektiert werden kann. Derartige Materialien sind insbesondere Stoffe und Materialen mit Gefährdungspotential, deren Anwesenheit in dem Objekt 102, insbesondere als Inhalt von in dem Objekt 102 verborgenen Gegenständen 104 detektiert werden soll, sowie Materialien aus denen ein solcher Gegenstand bestehen kann.

Flüssigkeiten werden überwiegend in flaschenähnlichen Behältnissen aufbewahrt. Da das Material des Behältnisses eine möglicherweise gefährliche Flüssigkeit umgibt, wird die Auswertung der in dem Behältnis befindlichen Flüssigkeit in einem Röntgenbild erschwert. Daher ist es von Vorteil, wenn bei der Bildauswertung ein Gegenstand als Flasche erkannt wird, damit bei der Auswertung des Inhalts der Flasche, der Einfluss des Materials der Flasche berücksichtigt werden kann.

Um ein bestimmtes Material, beispielsweise Glas, in dem Objekt 102 zu detektieren, wird dieses auf dem Bandförderer 116 durch die verschiedenen von den Röntgenstrahlern 106, 108 erzeugten Strahlenebenen gefördert, wobei die Intensitäten der nicht absorbierten Röntgenstrahlung von den jeweiligen Detektoranordnungen 110, 112 gemessen werden. Aus den gemessenen Intensitätswerten jeder der Detektoranordnungen 110, 112 wird jeweils ein zweidimensionales Röntgenbild (vgl. Figuren 1 und 3) des Objektes 102 erstellt, das in der Bildverarbeitungseinheit 210 der Auswerteeinheit 200 zur weiteren Verarbeitung gespeichert wird.

Ein Röntgenbild kann aus Bildpunkten (Pixel) mit zugeordneten Werten in der Intensität und/oder Farbe basierend auf einer Materialgröße gebildet werden, die aus den Intensitäten der jeweiligen Detektoren bestimmt werden. Bevorzugt wird für jeden Bildpunkt der Wert der effektiven Ordnungszahl (Zeff) bestimmt, der nach einem bekannten Dual-Energy- oder Mehrenergie-Verfahren jeweils aus jeweiligen Intensitätswerten für das hohe und niedrige Energiespektrum ermittelt wird. Der ermittelte Wert kann auf dem Bildschirm 222 als zugeordneter Grau- oder Farbwert dargestellt werden. Auf dem Röntgenbild werden dann Bereiche bestimmt, in denen der Wert der Materialgröße, im Beispiel der Wert von Zeff, in einem interessierenden Bereich liegt, beispielsweise sich in einem Wertebereich von Kunststoff (Zeff ungefähr 6 bis 7) oder Glas (Zeff ungefähr 13 bis 14) als typisches Material für Flaschen befindet. Bereiche des Röntgenbilds, die als zu einer Flasche zugehörig identifiziert und segmentiert wurden, stellen ein räumliches Gebiet und somit einen Gegenstand 104 innerhalb des Objektes 102 dar, und werden zur weiteren Überprüfung des Inhalts der Flaschen ausselektiert.

Figur 6 zeigt schematisch ein vereinfachtes Blockschaltbild der Bildverarbeitungseinheit 210 der Figur 5 zur Implementierung eines der hier vorgeschlagenen Verfahren zur Detektion von Gegenständen 104 mit wenigstens einer Symmetrieeigenschaft in dem Objekt 102.

Es versteht sich, dass die Auswerteeinrichtung 200 und die Steuereinrichtung 120 auch mittels eines einzigen Computersystems als Systemsteuerung implementiert sein können.

Es versteht sich auch, dass grundsätzlich die Verarbeitung und Auswertung der durch die Inspektionsvorrichtung 100 erfassten Intensitätswerte in einem Computersystem 250 erfolgen kann, welches lokal in oder an der Röntgenprüfanlage 100 angeordnet ist. Natürlich ist es auch möglich, dass ein solches Computersystem 250, beispielsweise über ein Computernetzwerk 260 gekoppelt, an einem zentralen Ort nach Art eines Mainframe-Computersystems zentral, insbesondere für mehrere Röntgenprüfanlagen, angeordnet ist. Es ist auch möglich, dass das Computersystem 250 von mehreren miteinander über ein Computernetzwerk verbundene und somit räumlich verteilte Computersysteme gebildet ist. Es ist auch möglich, dass das Computersystem 250 als mobiler Computer mit einer oder mehreren Röntgenprüfanlagen verbunden ist. Schließlich kann auch die Bildgebungseinrichtung 220 und der Bildschirm 222 als eine mobile Einheit nach Art eines Tablett-Computers ausgeführt sein, der sich besonders einfach vom Sicherheitspersonal mitführen lässt und beispielswiese orientierungsrichtig neben ein Gepäckstück gelegt werden kann, um einen zu prüfenden Gegenstand in dem Gepäckstück leichter auffinden zu können.

Figur 6 zeigt im Wesentlichen nur die grundsätzlichen Bestandteile der Bildverarbeitungseinheit 210, die zur Implementierung der Auswertung der erfassten Röntgenbilder notwendig sind. Die Bildverarbeitungseinheit 210 besitzt wenigstens einen mittels Software steuerbaren Prozessor 211. In wenigstens einem ersten Speicher 212 sind Softwaremittel, beispielsweise in Form eines Computerprogramms zur Umsetzung der gewünschten Funktionen/Verfahren abgelegt, wenn das Computerprogramm in dem wenigstens einen Prozessor 211 ausgeführt wird.

Wenigstens ein zweiter Speicher 213 ist als Arbeitsspeicher für zu verarbeitende Daten und Zwischen- bzw. Endergebnisse vorgesehen. Ein dritter Speicher 214 kann vorgesehen sein, in dem z.B. die Vergleichswerte für spezifische Materialgrößenwerte anstelle der Datenbank 230 hinterlegt sind; diese Materialgrößenwerte können beispielsweise spezifische, die Absorption von Röntgenstrahlen beeinflussende Größen bekannter Materialen, insbesondere die Dichte und/oder der Massenschwächungskoeffizient und/oder die effektive Kernzahl dieser Materialien sein. Weiter können dort beispielsweise auch Modelldaten als Referenz für aus dem Röntgenbild ermittelte Merkmalsdeskriptoren, z.B. für SIFT-Merkmale, gespeichert sein.

Weiter besitzt die Bildverarbeitungseinheit 210 Eingabemittel 215, wie beispielsweise eine Tastatur, ein Touchpad, eine Zeigereingabeeinheit (Computermaus) oder dergleichen bzw. eine spezifisch auf eine einfache Bedienung abgestimmte Variante einzelner dieser Mittel bzw. Kombination davon.

Über die Datenschnittstelle oder Datenverbindung 128 ist die Bildverarbeitungseinheit 210 mit der Steuereinrichtung 120 der Röntgenprüfanlage 100 gekoppelt.

Hinsichtlich der Bildverarbeitungsvorrichtung 210 sei noch angemerkt, dass der Begriff "Prozessor" sich auf eine beliebige elektronische Einheit bzw. Schaltung oder einen Teil einer elektronischen Einrichtung bzw. Schaltung beziehen kann, welche(s) elektronische Daten aus Registern und/oder einem Speicher verarbeitet, um elektronische Daten in andere elektronische Daten umzusetzen bzw. aus Eingabedaten entsprechende Ausgabedaten zu erzeugen, die in Registern und/oder einem Speicher gespeichert werden können. Wie bereits angesprochen, kann die Bildverarbeitungseinheit 210 einen Prozessor 211 oder mehrere Prozessoren oder Prozessorkerne umfassen.

Die Bildverarbeitungseinheit 210 ist bevorzugt als Kombination aus Hardware, Firmware und Software realisiert. Entsprechend können die hier beschriebenen Verfahren teilweise oder auch vollständig als auf einem maschinenlesbaren Medium gespeicherte Softwaremittel realisiert werden, die zur Durchführung in die Bildverarbeitungseinheit 210 eingelesen und ausgeführt werden können. Ein maschinen- oder elektronisch lesbares Medium (Datenträger) kann für einen beliebigen Mechanismus zum Speichern, Übertragen oder Empfangen von Information in einer von einem Computer lesbaren Form eingerichtet sein. Als nicht abschließende Beispiele seien hier Nur-Lese-Speicher (ROM), Direktzugriffsspeicher (RAM), Magnetspeicherplatten, optische Speichermedien, Flash-Speichermedien genannt. Schließlich können die Softwaremittel auch in Form eines Datenstroms als optische, akustische oder auf sonstige Art und Weise weitergeleitete Signale (z.B. als Trägerwellen, Infrarotsignale, digitale Signale usw.) vorliegen, die über entsprechende Schnittstellen, beispielsweise Antennen, die diese Signale aussenden und/oder empfangen, übertragen werden können.

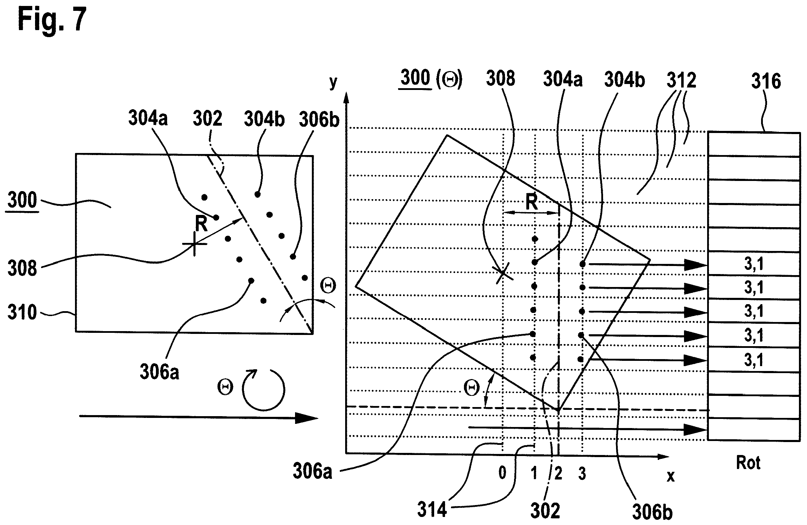

Figur 7 veranschaulicht ein mögliches Grundprinzip zum Auffinden von Symmetrielinien in einem Kantenbild 300, wobei es sich um die Kantenbilder 1b und 40b der Figuren 2 und 4 handeln kann; die Darstellung der Figur 7 geht auf die eingangs genannte Veröffentlichung von Li, Zhang und Kleeman, "Real Time Detection and Segmentation of Reflectionally Symmetric Objects in Digital Images", Proceedings of the 2006 IEEE/RSJ, International Conference on Intelligent Robots and Systems, October 9-15, 2006, Beijing, China zurück.

In der Darstellung der Figur 7 sei angenommen, dass das Kantenbild 300 für eine Suche nach Symmetrielinien vorliegt. Eine mögliche Symmetrielinie 302 wird durch zu dieser Linie symmetrisch liegende Paare von Kantenbildpunkten 304a, 304b bzw. 306a, 306b bestimmt. Zur Vereinfachung sind hier nur zwei Beispiele für Kantenbildpunktpaare mit Bezugszeichen versehen; Kantenbildpunkte eines Paares sind durch dieselbe Bezugszeichenziffer gekennzeichnet, wobei sich die Punkte eines Paars durch den zusätzlich zugeordneten kleinen Buchstaben unterscheiden lassen.

Die als Beispiel in das Kantenbild 300 eingezeichnete Symmetrielinie 302 kann durch ihren Abstand zum Bildmittelpunkt 308 und einen Winkel Θ beschrieben werden, der gegenüber einer eindeutigen Bezugslinie, wie dem senkrechten Bildrand 310, definiert sein kann.

Ein Grundprinzip des Auffindens von Symmetrielinien besteht darin, das Kantenbild 300 über einen Winkelbereich von 0 bis 180° (0 bis π) in festen Winkelschritten, beispielsweise mit einem 1°, zu drehen und dann im gedrehten Kantenbild nach möglicherweise im Kantenbild enthaltenen senkrecht verlaufenden Symmetrielinien zu suchen. Der aktuelle Drehwinkel Θ des Kantenbildes 300 entspricht dem Winkel einer in dem jeweiligen Schritt aufgefundenen Symmetrielinie.

Um beispielsweise, wie im rechten Bereich der Figur 7 dargestellt, die Symmetrielinie 302 zu finden, wird das Kantenbild 300 von links nach rechts für jede mögliche senkrechte Position 314 analysiert, indem unter der Annahme einer Symmetrielinie an einer Position 314 Zeile 312 für Zeile 312 untersucht wird, welche Kantenbildpunktpaare (302a, 302b), (304a, 304b) zu einer Symmetrielinie an der jeweiligen Spaltenposition 314 passen. Die dabei festgestellten Kantenbildpunktpaare werden in einer Matrix Rot 316 für jede Spaltenposition gesammelt. Wenn alle Zeilen 312 für eine bestimmte Spaltenposition 314 durchlaufen wurden, kann die Anzahl aller Kantenbildpunktepaare, die zu einer möglichen Symmetrielinie an der zugeordneten Spaltenposition 314 gepasst haben, als Ergebniswert für die Annahme einer Symmetrielinie an dieser Stelle genommen werden. In der Figur 7 sind die Spalten ausgehend vom Bildmittelpunkt (x) in Richtung x indiziert. In den Feldern der Matrix Rot 316 werden für jede Zeile 312, die x-Koordinaten der Kantenbildpunktpaare, die zu der Symmetrieachse 302 passen notiert; dies sind entsprechend die x-Werte 3 und 1. Für jeden Drehwinkel Θ liegt nach einem vollständigen Durchgang über alle Spaltenpositionen 314 für jede Spaltenposition, d.h. für jeden x-Wert ein Ergebniswert vor. Anhand dieser Häufigkeitsverteilung über die Spaltenpositionen x werden die möglicherweise im Kantenbild 300 vorhandenen Symmetrielinien erkannt.

Der vorstehende Absatz ist eine vereinfachte Darstellung der Vorgehensweise. Hinsichtlich näherer Einzelheiten sei auf die genannte Veröffentlichung verwiesen, deren Inhalt - wie bereits an anderer Stelle genannt - hier durch Bezugnahme übernommen wird.

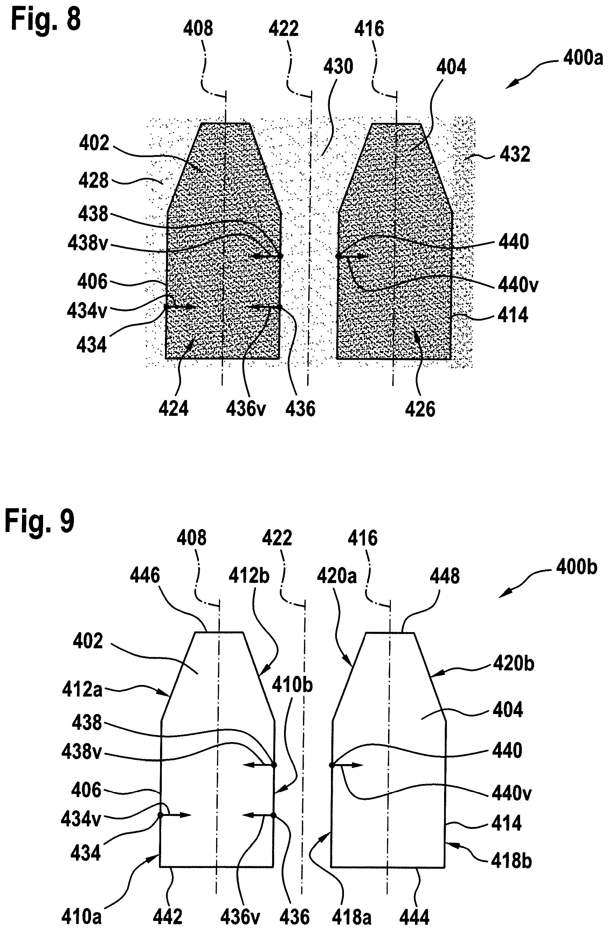

Anhand der Figur 8 und 9 werden im Folgenden die vorgeschlagenen Verbesserungsaspekte zur Vermeidung des Auffindens von Pseudosymmetrielinien erläutert.

Wie mit Figuren 1 bis 4 anhand von realen Röntgenbildern veranschaulicht, werden zuerst von Kanten einzelner im Röntgenbild enthaltener Gegenstände detektiert und ein entsprechenden Kantenbild 1a, 40a (Figuren 2 und 4) erzeugt.

Figur 8 zeigt eine vereinfachte Darstellung eines Röntgenbilds 400a.

Anschließend werden, wie schematisch anhand der Figur 7 erläutert, mögliche Symmetrielinien der im Röntgenbild enthaltenen Gegenstände mit Symmetrieeigenschaften ermittelt. Dies erfolgt, wie in Figur 7 dargestellt, basierend auf zueinander bezüglich der jeweiligen Symmetrielinie symmetrisch angeordneten Paaren von Kantenbildpunkten (304a, 304b), (306a, 306b) des Kantenbilds 300.

Figur 9 zeigt ein zum Röntgenbild 400a der Figur 8 mittels Kantenfiltervorverarbeitung zugehörige Kantenbild 400b. Der Ausschnitt enthält nur einen ersten Gegenstand 402 und einen zweiten Gegenstand 404 mit Symmetrieeigenschaften.

Der erste Gegenstand besitzt eine erste Umrisslinie 406 und ist zu einer ersten Symmetrielinie 408 symmetrisch. Weiter verlaufen linke Außenkantenabschnitte 410a und 412a des ersten Gegenstands 402 symmetrisch zu rechten Außenkantenabschnitten 410b und 412b. Der zweite Gegenstand 404 besitzt eine zweite Umrisslinie 414 und ist zu einer zweiten Symmetrielinie 416 symmetrisch. Weiter verlaufen linke Außenkantenabschnitte 418a und 420a des zweiten Gegenstands 404 symmetrisch zu rechten Außenkantenabschnitten 418b und 420b.

Aufgrund der Arbeitsweise des anhand der Figur 7 erläuterten Algorithmus zum Auffinden von Symmetrielinien wird dieser auch eine dritte Symmetrielinie 422 auffinden. Zu der dritten Symmetrielinie 422 existiert kein realer Gegenstand im Röntgenbild 400. Damit ist die Symmetrielinie 422 eine Pseudosymmetrielinie. Derartige Pseudosymmetrielinien können dazu führen, dass in einem Röntgenbild falsche Bereiche als Gegenstand identifiziert und markiert werden. Dies soll vermieden werden.

Wie bereits erläutert, kann in dem Röntgenbild 400a erkannt werden, auf welcher Seite der Außenkanten 410a, 410b, 412a, 412b bzw. 418a, 418b, 420a, 420b Bildbereiche des Röntgenbilds 400a zu einem der Gegenstände 402, 404 gehören. Da das Röntgenbild 400a als Transmissionsbild basierend auf Absorption der Röntgenstrahlen von im Strahlenweg liegender Materie erzeugt wird, sind Bildbereiche 424, 426, die einem der Gegenstände 402, 404 im Röntgenbild 400a zugeordnet werden können, dunkler als Bildbereiche 428, 430, 432, die der Umgebung der Gegenstände 402, 404 angehören. Damit kann grundsätzlich für jede Kante bzw. jeden Kantenbildpunkt 434,436, 438, 440 festgestellt werden, auf welcher Seite der jeweiligen Kante eines Gegenstands der Gegenstand liegt. Mit anderen Worten kann bestimmt werden, in welcher Richtung ausgehend von der jeweiligen Kante der Bildbereich innerhalb des zugehörigen Gegenstands liegt. D.h., den einzelnen Kanten können im Röntgenbild jeweils eine Richtung zugeordnet werden.

Dies wird bei der Erkennung der Symmetrielinie 408, 416 berücksichtigt, um die Erkennung der Pseudosymmetrielinie 422 zu vermeiden. Dazu werden bei der anhand von Figur 7 erläuterten Suche nach Symmetrielinie im Kantenbild 400b, jeweils für eine zunächst angenommene Symmetrielinie Kantenbildpunkte solcher Kanten nicht berücksichtigt, für welche die angenommene Symmetrielinie außerhalb des Gegenstandes liegen würde, zu dem die Kante gehört. Damit wird der Suchbereich für Symmetrielinien effektiv auf Bildbereiche eingeschränkt, die im Inneren eines Gegenstands liegen.

Die "richtige" Seite einer Kante wird als einem im Röntgenbild enthaltenen Gegenstand zugehörig erkannt, indem die im Röntgenbild für Bildpunkte auf den beiden Seiten der betrachteten Kante gemessenen Röntgenstrahlenintensitäten verglichen werden. Im Prinzip werden die Bildbereiche 424, 426, für die überwiegend geringere Intensitätswerte vorliegen, d.h. die im Röntgenbild 400a dunkler sind, dem Inneren eines Gegenstand 402 bzw. 404 zugeordnet.

Zur einfachen Handhabung wird für jeden Kantenbildpunkt 434, 436, 438, 440 ein Vektor 434v, 436v, 438v, 440v gespeichert, der so definiert ist, dass er ausgehend von der zugehörigen Kante 410a, 410b bzw. 418a in den zur jeweiligen Kante zugehörigen Gegenstand 402 bzw. 404 zeigt bzw. gerichtet ist. Damit bilden die Koordinaten eines Kantenbildpunkts zusammen mit dem Vektor einen Merkmalsvektor.

Im Röntgenbild 400a der Figur 8 und im Kantenbild 400b der Figur 9 ist dies jeweils für zwei Paare (434, 436) und (438, 440) von Kantenbildpunkten veranschaulicht. Die Kantenbildpunkte 434 und 436 liegen symmetrisch zur Symmetrielinie 408. Entsprechend der diesen Kantenbildpunkte 434, 436 zugeordneten Richtungsvektoren 434v, 436v liegt die Symmetrielinie 408 in einem Bildbereich 424, der dem Gegenstand 402 in dem Röntgenbild 400a zuordenbar ist. Daher werden die beiden Kantenbildpunkte 434, 436 bei der Bestimmung der Symmetrielinie 408 berücksichtig. Mit anderen Worten dürfen die beiden Kantenbildpunkte 434, 436 für die Symmetrielinie 408 "abstimmen". Werden dagegen die den Kantenbildpunkten 438, 440 zugeordneten Richtungsvektoren 438v, 440v betrachtet, erkennt man, dass die Pseudosymmetrielinie 422 in einem Bildbereich 430 liegt, der keinem der Gegenstände 402, 404 in dem Röntgenbild 400a zugeordnet werden kann. Die Richtungsvektoren 438v, 440v zeigen nämlich beide von der Pseudosymmetrielinie 422 weg. Daher werden die beiden Kantenbildpunkte 438, 440 bei der Symmetrielinie 422 nicht berücksichtig. Mit anderen Worten dürfen die beiden Kantenbildpunkte 438, 440 für die Symmetrielinie 422 nicht "abstimmen". Durch diese Verbesserung erhalten Pseudosymmetrielinien bei dem in der Figur 7 veranschaulichten Vorgehen einen geringeren Ergebniswert und werden nicht als Symmetrielinie ermittelt.

Die vorstehend erläuterte Verbesserung kann im Algorithmus zum Auffinden von Symmetrieline besonders einfach berücksichtigt werden, indem nur der zu einem Bildpunkt zughörige Richtungsvektor daraufhin überprüft wird, ob dieser zu der betrachteten Symmetrielinie hin oder davon weg zeigt. D.h., es werden für eine mögliche Symmetrielinie nur Kantenbildpunkte herangezogen, deren Richtungsvektor zu einer betrachteten Symmetrielinie hinzeigt.

Der hier erläuterte Richtungsvektor muss nicht unbedingt für jeden einzelnen Kantenbildpunkt gespeichert werden, sondern kann auch für einzelne Kantenabschnitte bestimmt und gespeichert sein. Für den einzelnen Kantenbildpunkt ergibt sich der jeweilige Richtungsvektor dann über die Zugehörigkeit zu einer Kante.

Durch die Richtungsvektoren 434v, 436v, 438v, 440v wird der Algorithmus zum Auffinden von Symmetrielinien robuster. Im Ergebnis wird die Erkennung von Pseudosymmetrielinie halbiert.

Eine weitere Verbesserung des Algorithmus zum Auffinden von Symmetrielinien hinsichtlich Pseudosymmetrielinien und Rechenaufwand wird durch folgende Maßnahme erreicht, die zusätzlich oder alternativ zu den oben beschriebenen Verbesserungen eingesetzt werden kann. Bei dem anhand von Figur 7 erläuterten Verfahren wird das Kantenbild 300 schrittweise über einen vorbestimmten Winkelbereich gedreht und für jeden Drehwinkel Θ werden mögliche im gedrehten Kantenbild 300(Θ) enthalte vertikale Symmetrielinien 302 bestimmt. Dazu wird - wie bereits erläutert - grundsätzlich für jede mögliche senkrechte Symmetrielinie festgestellt, welche Paaren von Kantenbildpunkten des gedrehten Kantenbilds 300(Θ) einer bestimmten Symmetrielinie zugeordnet werden können.

In Figur 9 sind in dem Kantenbild auch horizontal verlaufende Kanten 442, 444, 446, 448 enthalten, die zu den jeweiligen Symmetrielinien 408, 416 ebenfalls symmetrisch sind. Damit erscheint es zunächst richtig, die auf den Kanten 442, 444, 446, 448 bezüglich der jeweiligen Symmetrielinie 408, 416 identifizierbare Paare von Kantenbildpunkten für die Bestimmung der jeweiligen Symmetrielinie zu berücksichtigen.

Es wurde jedoch festgestellt, dass in den meisten Fällen horizontal verlaufende Kanten im gedrehten Kantenbild 300(Θ) nicht zu einem Gegenstand gehören, für den es eine senkrechte Symmetrielinie im gedrehten Kantenbild 300(Θ) gibt. D.h., horizontale Kanten im gedrehten Kantenbild 300(Θ) führen überwiegend zur Ermittlung von Pseudosymmetrielinien.

Daher ist in der Weiterbildung des Algorithmus zur Vermeidung der Ermittlung von Pseudosymmetrielinien vorgesehen, dass bei dem Verfahren der Figur 7 für jeden Drehwinkel Θ jeweils Kantenbildpunkte, die im gedrehten Kantenbild 300(Θ) zu einer Symmetrielinie orthogonal verlaufenden Kante, wie beispielsweise die Kanten 442, 444, 446, 448 in der Figur 9, nicht berücksichtigt werden. Damit wird vermieden, dass solche Kantenbildpunkte in die Matrix Rot 316 der Figur 7 eingehen und einen Ergebniswert für eine Spalte erhöhen, d.h. für eine Symmetrielinie "stimmen", die es tatsächlich nicht gibt. Damit werden Pseudosymmetrielinien reduziert. Weiter verringert dies den Rechenaufwand für den Algorithmus.

Besonders Flaschen als aufzufindende Gegenstände weisen sehr häufig aus annähernd jeder Betrachtungsrichtung einen Umriss auf, der sich zu großen Teilen aus Geraden, d.h. aus geradlinigen Kantenabschnitten zusammensetzt. Praktisch kann dies bei der Umsetzung des Algorithmus zum Auffinden einer Symmetrielinie umgesetzt werden, indem für jede näherungsweise geradlinige Kante im Kantenbild ein Kantenrichtungsvektor ermittelt und beispielsweise für zugehörige Kantenbildpunkte der Kante gespeichert wird.

Beispielsweise werden im Kantenbild 400b der Figur 9 beim Bestimmen der Symmetrielinie 408 nur Kantenbildpunkte von Kantenpaaren berücksichtigt, die zueinander bezüglich der Symmetrielinie 408 symmetrisch verlaufen. Da beispielsweise aus den Richtungsvektoren 434v und 436v der beiden Kantenbildpunkte 434 und 436 die Kantenrichtungsvektoren für die Kanten 410a und 410b abgeleitet werden können, kann für die zur Symmetrielinie 408 symmetrisch liegende Kantenbildpunkte 434 und 436 eine Plausibilitätsprüfung durchgeführt werden. Dabei muss nicht einmal unbedingt ein Kantenrichtungsvektor bestimmt werden. Vielmehr genügt es zu überprüfen, ob die jeweiligen Richtungsvektoren der betrachteten Kantenbildpunkte komplementär zueinander sind, d.h. beide Winkel müssen sich zu 180° bzw. 360° ergänzen. Wenn die Überprüfung ergibt, das die betrachteten Kantentrichtungsvektoren 434v und 436v in Bezug auf die Symmetrielinie 408 symmetrisch zueinander verlaufen, werden die Kantenbildpunkte 434 und 436 bei der Bestimmung der Symmetrielinie 408 berücksichtigt; anderenfalls werden sie nicht berücksichtigt, d.h. gehen im Verfahren der Figur 7 nicht in die Matrix Rot 316 ein, d.h. dürfen nicht für die Symmetrielinie 408 "stimmen".

Ziel des Verfahren ist es, beispielsweise die Gegenstände 402, 404 (Figur 8) mit Symmetrieeigenschaften im Kantenbild 400b (Figur 9) basierend auf der jeweils zugeordneten Symmetrielinie 408 bzw. 416 zu segmentiert. Dazu werden für die Gegenstände 402, 404 (Figur 8) die jeweilige Umrisslinie 406 bzw. 414 (Figur 8, 9) bestimmt. Die Umrisslinien 406, 414 sind Konturlinien, die zur jeweiligen Symmetrielinie 408 bzw. 416 symmetrisch sind.

Bei Röntgenbildern von Gepäckstücken, wie in den Figuren 1 und 3 ersichtlich, sind viele Gegenstände durcheinander enthalten. Dabei überlagern sich einzelne Gegenstände gegenseitig im Röntgenbild, sodass Kanten der Gegenstände im Röntgenbild verdeckt sind bzw. nicht eindeutig erkennbar sind.

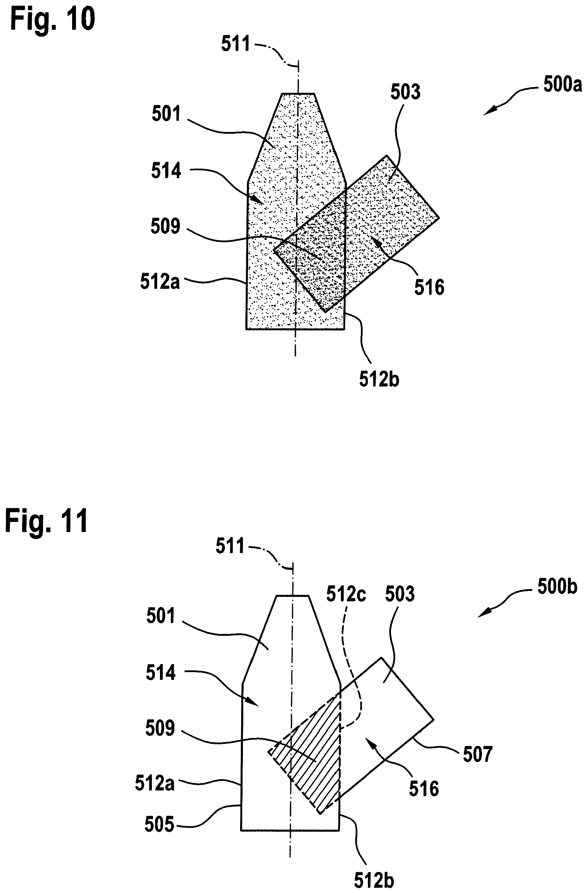

Figur 10 zeigt ein vereinfachtes Röntgenbild 500a und Figur 11 das dazugehörige Kantenbild 500b. In dem Röntgenbild 500a befinden sich zwei Gegenstände 501 und 503, die sich zum Teil überdecken. Die beiden Gegenstände 501 und 503 sind mit Ihren jeweiligen Umrisslinien 505 und 507 in der Figur 11 gezeigt, wobei ein Überdeckungsbereich 509 der beiden Gegenstände 501 und 503 schraffiert gekennzeichnet ist. Für den Gegenstand 501 wurde die Symmetrielinie 511 bestimmt, die sowohl in Figur 10 als auch in Figur 11 eingetragen ist.

Gemäß einer vorteilhaften Weiterbildung des hier vorgeschlagenen Verfahrens werden bei zwei zu der Symmetrielinie 511 als symmetrisch bestimmten Kanten 512a und 512b bei der in der Kante 512b fehlende Kantenbildpunkte spiegelsymmetrisch zur Symmetrielinie 511 basierend auf der Kante 512a ergänzt. Das so in Kante 512b ergänzte Kantenstück ist mit 512c gekennzeichnet. Damit wird die durch die Überdeckung 509 verursachte Lücke in der Kante 512b der Umrisslinie 505 geschlossen.

Der Überdeckungsbereich 509, in dem der Gegenstand 501 und die Kante 512b des Gegenstands 501 teilweise vom anderen Gegenstand 503 überdeckt werden, wird basierend auf für den Überdeckungsbereich 509 zugehörigen Bildpunkten gemessene Röntgenstrahlenintensitäten bestimmt. Beim Überdeckungsbereich 509 im Röntgenbild 500a wurden geringere Intensitätswerte für Röntgenstrahlen gemessen als in den Bildbereichen 514, 516 der einzelnen Gegenstände 501, 503 ohne Überdeckung. Der Überdeckungsbereich 509 ist daher im Röntgenbild 500a dunkler als die nicht überdeckten Bildbereiche 514, 516.

Mittels dieser Maßnahme kann der teilverdeckte Gegenstand 501 mit Symmetrieeigenschaft besser segmentiert werden.

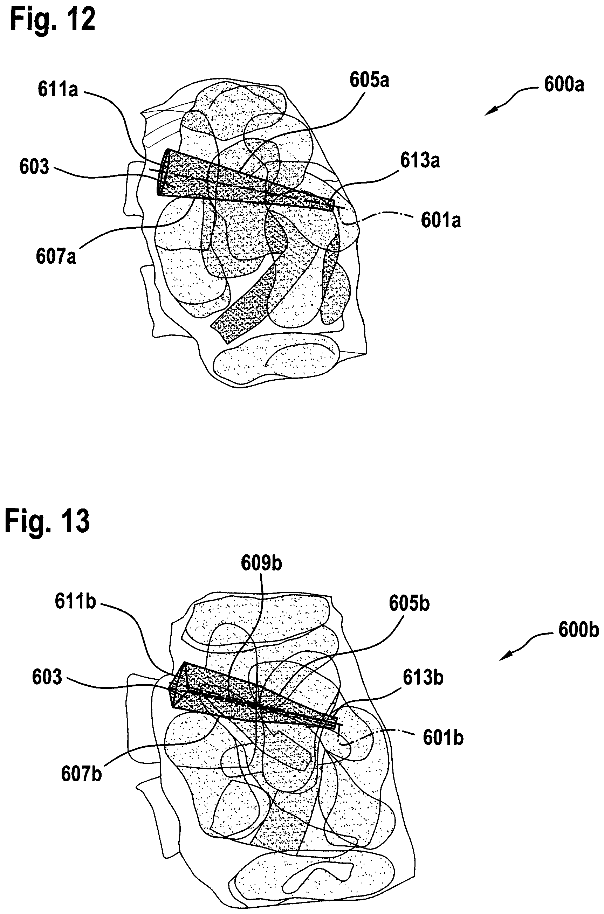

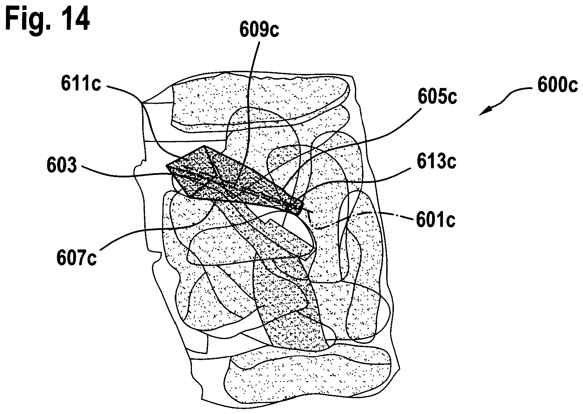

Die Figuren 12 bis 14 veranschaulichen eine weitere vorteilhafte Weiterbildung des Verfahrens. Dabei wurde jeweils eine Symmetrielinie 601a, 601b, 601c für denselben Gegenstand, nämlich eine Flasche 603, mit Symmetrieeigenschaften in wenigstens drei Röntgenbilder 600a, 600b, 600c desselben Inspektionsobjekts aus jeweils verschiedenen Durchstrahlungsrichtungen bestimmt. Zur Erzeugung der Röntgenbilder 600a, 600b, 600c kann beispielsweise eine Röntgenprüfanlage verwendet werden, wie sie aus der DE 101 49 254 A1 bekannt ist.

In den jeweiligen Röntgenbildern 600a, 600b, 600c können zusätzlich jeweils der Boden 611a bzw. 611b bzw. 611c der Flasche 603 und der Hals 613a bzw. 613b bzw. 613c der Flasche 603 bestimmt werden, um den jeweiligen Symmetrielinen 601a, 601b, 601c eine Richtung zuordnen zu können. Diese Maßnahme macht die folgenden Projektionen stabiler.

Die in den Röntgenbildern 600a, 600b, 600c identifizierte Flasche 603 kann nicht anhand ihrer identifizierten Außenkanten validieren werden, da die zur Flasche 603 gehörigen Bildbereich in den Röntgenbildern 600a, 600b, 600c nicht gleich sind. Die Flasche 603 kann aber mittels der in den einzelnen Röntgenbildern 600a, 600b, 600c identifizierten Symmetrielinien 601a, 601b, 601c im 3D-Raum validiert werden. Die einzelnen Symmetrielinie 601a, 601b, 601c der Röntgenbilder 600a, 600b, 600c sind für sich genommen im 3D-Raum nicht eindeutig bestimmt. Jede Symmetrielinie 601a, 601b, 601c entspricht im 3D-Raum einer entsprechenden Symmetrieebene. Ob die in den drei unterschiedlichen Röntgenbildern 600a, 600b, 600c ermittelten Symmetrielinien 601a, 601b, 601c zur selben Flasche 603 gehören, kann durch eine Projektion der Symmetrielinien 601a, 601b, 601c in den dreidimensionalen (3D) Raum geprüft werden. Wenn tatsächlich in allen Röntgenbildern 600a, 600b, 600c dieselbe Flasche 603 erkannt wurde, fallen theoretisch die drei Schnittgeraden von jeweils zwei der Symmetrieebenen im 3D-Raum zusammen. In der Praxis werden diese Schnittlinien zumindest in einem bestimmten Toleranzbereich zueinander benachbart liegen und zumindest dieselbe Richtung aufweisen. Wenn diese Bedingung erfüllt ist, gilt die Flasche 603 und die in den Röntgenbildern 600a, 600b, 600c bestimmten Symmetrielinie 601a, 601b, 601c als validiert.

Basierend auf den jeweils segmentierten, zur Flasche 603 gehörigen Bildbereichen in den drei Röntgenbildern 600a, 600b, 600c wurde ein dreidimensionales Modell der Flasche 603 bestimmt. Da für das einzelne Röntgenbild 600a bzw. 600b bzw. 600c jeweils die Richtung bekannt ist, aus der das Inspektionsobjekt durchstrahlt worden ist, wurden basierend auf dem 3D-Modell die Außenkanten 605a, 607a bzw. 605b, 607b bzw. 605c, 607c sowie die jeweilige Symmetrielinie 601a bzw. 601b bzw. 601c der Flasche 603 in das jeweilige Röntgenbild 600a bzw. 600b bzw. 600c projiziert. Die Flasche 603 ist damit für eine Bedienperson der Röntgenprüfanlage besser erkennbar.

Besonders vorteilhaft werden in das jeweilige Röntgenbild 600a bzw. 600b bzw. 600c die jeweils ursprünglich nicht sichtbaren Kanten 609a bzw. 609b bzw. 609c projiziert. Die Flasche 603 ist dann für eine Bedienperson der Röntgenprüfanlage noch besser erkennbar.

Durch das Projizieren der Kanten im jeweiligen Röntgenbild 600a bzw. 600b bzw. 600c der gefundenen Flasche 603 sowie der gefundenen Symmetrielinie 601a bzw. 601b bzw. 601c in den dreidimensionalen (3D) Raum können die Flasche 603 und die gefundenen Symmetrielinien 601a, 601b, 601c validiert werden.

## Patentansprüche

1. Verfahren zur Detektion eines Gegenstands (23; 53; 104; 402, 404; 501; 603), insbesondere eines Behältnisses, mit wenigstens einer Symmetrieeigenschaft im Inneren eines Inspektionsobjekts (102), beispielsweise eines Gepäckstücks, basierend auf wenigstens einem Transmissionsbild (1a; 40a; 400a; 500a; 600a; 600b; 600c) des Inspektionsobjekts (102), wobei das Verfahren einen Schritt mit Erzeugen eines Transmissionsbilds (1a; 40a; 400a; 500a; 600a; 600b; 600c) durch Inspektion eines Inspektionsobjekts (102) mittels ionisierender Strahlung aufweist und nachfolgend die folgenden Schritte aufweist:
(a) Detektieren von Kanten (29, 31; 59, 65; 410a, 412a, 410b, 412b, 442, 446, 418a, 420a, 418b, 420b, 444, 448; 512a, 512b) von im Transmissionsbild (1a; 40a; 400a; 500a; 600a; 600b; 600c) enthaltenen Gegenständen zur Erzeugung eines Kantenbildes (1b; 40b; 400b; 500b); und
(b) Detektion des Gegenstands (23; 53; 104; 402, 404; 501; 603) durch Bestimmen einer Symmetrielinie (27; 61; 408, 416, 511; 601a; 601b; 601c) des im Transmissionsbild (1a; 40a; 400a; 500a; 600a; 600b; 600c) enthaltenen Gegenstands (23; 53; 104; 402, 404; 501; 603) mit wenigstens einer Symmetrieeigenschaft durch Auffinden von bezüglich der zu bestimmenden Symmetrielinie (27; 61; 408, 416, 511; 601a; 601b; 601c) zueinander symmetrisch angeordneten Paaren von Kantenbildpunkten des Kantenbilds (1b; 40b; 400b; 500b); **gekennzeichnet dadurch, dass**
im Schritt (b) beim Bestimmen der Symmetrielinie (27; 61; 408, 416, 511; 601a; 601b; 601c) im Kantenbild (1b; 40b; 400b; 500b) nur solche Kantenbildpunkte berücksichtigt werden, für welche die Symmetrielinie (27; 61; 408, 416, 511; 601a; 601b; 601c) im Transmissionsbild (1a; 40a; 400a; 500a; 600a; 600b; 600c) im Bildbereich des Gegenstands (23; 53; 104; 402, 404; 501; 603), zu dem die Kantenbildpunkte gehören, liegt, und
im Schritt (b) basierend auf Intensitätswerten einzelner Bildpunkte im Transmissionsbild (400a) bestimmt wird, auf welcher Seite einer betrachteten Kante (410a, 410b, 418a) ein Bildbereich (424, 426, 430) des Transmissionsbilds (400a) dem zur Kante (410a, 410b, 418a) zugehörigen Gegenstand (402, 404) zuordenbar ist.

2. Verfahren nach Anspruch 1, wobei das Verfahren weiter aufweist:
Bestimmen von wenigstens einem Merkmalsdeskriptor für wenigstens einen Bildbereich in der Umgebung eines ausgewählten Kantenbildpunkts im Transmissionsbild, beispielsweise basierend auf einer skaleninvarianten Merkmalstransformation des Bildbereichs, und
Vergleichen des wenigstens einen Merkmalsdeskriptors mit Referenzwerten, um zu den ausgewählten Kantenbildpunkt als eine Außenkante eines Behältnis zu validieren.

3. Verfahren nach einem der Ansprüche 1 oder 2, wobei im Schritt (a) das Kantenbild (1b; 40b; 400b; 500b) basierend auf einzelnen Bildpunkten des Transmissionsbilds (1a; 40a; 400a; 500a; 600a; 600b; 600c) zugeordneten Materialinformationen erzeugt wird.

4. Verfahren nach einem der Ansprüche 1 bis 3, bei im Schritt (b) jeweils Kantenbildpunkte von orthogonal zu einer Symmetrielinie (408, 416) verlaufende Kanten (442, 446, 444, 448) bei der Bestimmung der Symmetrielinie (408, 416) nicht berücksichtigt werden.

5. Verfahren nach einem der Ansprüche 1 bis 4, wobei im Schritt (b) nur Kantenbildpunkte (434, 436) bei der Bestimmung der Symmetrielinie (408) berücksichtigt werden, wenn die jeweiligen Kanten (410a, 410b) Z an den Kantenbildpunkten (434, 436) zugeordnete Kantentrichtungsvektoren (434v, 436v) zur Symmetrielinie (408) aufweisen und Kantenwinkel bilden, die sich zu 180° oder 360° ergänzen.

6. Verfahren nach einem der Ansprüche 1 bis 5, wobei das Verfahren weiter aufweist:
(c) Segmentieren eines Gegenstands (501) mit Symmetrieeigenschaften in dem Kantenbild (500b) durch Bestimmen einer Umrisslinie (505) des Gegenstands (501), wobei im Schritt (c) bei zwei zu einer Symmetrieline (511) als symmetrisch bestimmten Kanten (512a, 512b) fehlende Teile (512c) der Kanten (512a, 512b) spiegelsymmetrisch zur Symmetrielinie (511) ergänzt werden, wenn die fehlenden Teile (512c) in einem Überdeckungsbereich (509) liegen, in dem der Gegenstand (501) und die Kante (512b) des Gegenstands (501) teilweise von einem anderen Gegenstand (503) überdeckt werden, wobei der Überdeckungsbereich (509) basierend auf Intensitätswerten im Transmissionsbild (500a) bestimmt wird.

7. Verfahren nach einem der Ansprüche 1 bis 6, wobei das Verfahren einen Gegenstand (603) mit wenigstens einer Symmetrieeigenschaft in wenigstens drei Transmissionsbildern (600a; 600b; 600c) desselben Inspektionsobjekts aus verschiedenen Durchstrahlungsrichtungen bestimmt, und das Verfahren weiter aufweist:
(d) Validieren der Symmetrielinien (601a; 601b; 601c) durch Projektion in einen 3D-Raum und Überprüfen der Lage von Schnittgeraden der Symmetrieebenen im 3D-Raum zueinander.

8. Verfahren nach einem der Ansprüche 1 bis 7, wobei das Verfahren zur Detektion von Flaschen (603) als der Gegenstand mit wenigstens einer Symmetrieeigenschaft, beispielsweise in einem Gepäckstück als ein Inspektionsobjekt eingerichtet ist, und das Verfahren bevorzugt weiter aufweist:
(e) Bestimmen in den jeweiligen Transmissionsbilder (600a; 600b; 600c) einer Richtung für die jeweilige Symmetrielinie (601a; 601b; 601c), indem besonders bevorzugt in den jeweiligen Transmissionsbilder (600a; 600b; 600c) ein Boden (611a, 611b, 611c) der Flasche (603) und ein Hals (613a; 613b; 613c) der Flasche (603) bestimmt werden.

9. Verfahren nach einem der Ansprüche 1 bis 8, wobei das Verfahren weiter aufweist;
(f) Schließen auf einen Inhalt eines Gegenstands (23; 53; 104; 402, 404; 501; 603) mit Symmetrieeigenschaften unter Berücksichtigung eines Außenmaterials des Gegenstands.

10. Computerprogramm mit Programmcode zur Durchführung eines Verfahrens nach einem der Ansprüche 1 bis 9, wenn das Computerprogramm in einem Computersystem ausgeführt wird.

11. Datenträger mit einem Computerprogramm gemäß Anspruch 10.

12. Datenstrom mit einem Computerprogramm gemäß Anspruch 10.

13. Vorrichtung (210) zur Bildverarbeitung mit wenigstens einem Prozessor (211), der zur Ausführung eines Verfahrens zur Detektion eines Gegenstands (23; 53; 104; 402, 404; 501; 603) mit Symmetrieeigenschaften im Inneren eines Inspektionsobjekts basierend auf wenigstens einem Transmissionsbild (1a; 40a; 400a; 500a; 600a; 600b; 600c) des Inspektionsobjekts gemäß einem der Ansprüche 1 bis 9 eingerichtet ist.

14. Röntgenprüfanlage (100) mit einer durch einen Strahlentunnel (114) führenden Transporteinrichtung (116) und um die Transporteinrichtung (116) angeordnete Röntgenstrahlenquellen (106, 108), die Röntgenstrahlen in zumindest zwei unterschiedlichen Strahlenebenen abgeben, auf die jeweils eine zugeordnete Detektoranordnung (110, 112) ausgerichtet ist, wobei die Röntgenprüfanlage eine Vorrichtung (210) zur Bildverarbeitung gemäß dem Anspruch 13 aufweist oder damit betriebsmäßig gekoppelt ist.

## Claims

1. A method for detecting an item (23; 53; 104; 402, 404; 501; 603), in particular a container, having at least one symmetry property, inside an inspection object (102), for example a piece of luggage, based on at least one transmission image (1a; 40a; 400a; 500a; 600a; 600b; 600c) of the inspection object (102), wherein the method includes a step of producing a transmission image (1a; 40a; 400a; 500a; 600a; 600b; 600c) by means of inspecting an inspection object (102) through ionizing radiation and subsequently the following steps:
(a) detection of edges (29, 31; 59, 65; 410a, 412a, 410b, 412b, 442, 446, 418a, 420a, 418b, 420b, 444, 448; 512a, 512b) of items contained in the transmission image (1a; 40a; 400a; 500a; 600a; 600b; 600c) in order to produce an edge image (1b; 40b; 400b; 500b); and
(b) detection of the item (23; 53; 104; 402, 404; 501; 603) by means of determining of a symmetry line (27; 61; 408, 416, 511; 601a; 601b; 601c) of the item (23; 53; 104; 402, 404; 501; 603) having at least one symmetry property contained in the transmission image (1a; 40a; 400a; 500a; 600a; 600b; 600c) by detecting pairs of edge picture elements of the edge image (1b; 40b; 400b; 500b) that are positioned symmetrically to each other relative to the symmetry line (27; 61; 408, 416, 511; 601a; 601b; 601c) that is to be determined; **characterized in that**
in step (b), in the determining of the symmetry line (27; 61; 408, 416, 511; 601a; 601b; 601c) in the edge image (1b; 40b; 400b; 500b), the only edge picture elements that are taken into account are those for which the symmetry line (27; 61; 408, 416, 511; 601a; 601b; 601c) in the transmission image (1a; 40a; 400a; 500a; 600a; 600b; 600c) lies in the image region of the item (23; 53; 104; 402, 404; 501; 603) to which the edge picture elements belong, and
in step (b), based on intensity values of individual picture elements in the transmission image (400a), a determination is made as to which side of an edge (410a, 410b, 418a) under consideration is the one in which an image region (424, 426, 430) of the transmission image (400a) can be associated with the item (402 and 404) belonging to the edge (410a, 410b, 418a).

2. The method according to claim 1, wherein the method also includes:
determination of at least one feature descriptor for at least one image region in the vicinity of a selected edge picture element in the transmission image, for example based on a scale-invariant feature transform of the image region, and
comparison of the at least one feature descriptor to reference values in order to validate the selected edge picture element as an outer edge of a container.

3. The method according to one of claims 1 or 2, wherein in step (a), the edge image (1b; 40b; 400b; 500b) is produced based on material information associated with individual picture elements of the transmission image (1a; 40a; 400a; 500a; 600a; 600b; 600c).

4. The method according to one of claims 1 through 3, in step (b), respective edge picture elements of edges (442, 446, 444, 448) extending orthogonal to a symmetry line (408, 416) are not taken into account in the determination of the symmetry line (408,416).

5. The method according to one of claims 1 through 4, wherein in step (b), edge picture elements (434, 436) are only taken into account in the determination of the symmetry line (408) if the respective edges (410a, 410b) have associated edge direction vectors (434v, 436v) on the edge picture elements (434, 436) and form edge angles relative to the symmetry line (408) that complement one another to 180° or 360°.

6. The method according to one of claims 1 through 5, wherein the method also includes:
(c) segmentation of an item (501) with symmetry properties in the edge image (500b) by means of determining of an outline (505) of the item (501); wherein in step (c), when there are two determined edges (512a, 512b) that are determined to be symmetrical to a symmetry line (511), missing parts (512c) of the edges (512a, 512b) are filled in mirror-symmetrically to the symmetry line (511) if the missing parts (512c) lie in an overlap region (509) in which the item (501) and the edge (512b) of the item (501) are partially overlapped by another item (503); and wherein the overlap region (509) is determined based on intensity values in the transmission image (500a).

7. The method according to one of claims 1 through 6, wherein the method determines an item (603) with at least one symmetry property in at least three transmission images (600a; 600b; 600c) of the same inspection object from different irradiation directions, and the method also includes:
(d) validation of symmetry lines (601a; 601b; 601c) through projection into a 3D space and inspecting the position of intersecting lines of the symmetry planes in the 3D space to one another.

8. The method according to one of claims 1 through 7, wherein the method is configured for detecting bottles (603) as the item with at least one symmetry property, for example in a piece of luggage as an inspection object, and the method preferably also includes:
(e) determination in the respective transmission images (600a; 600b; 600c) of a direction for the respective symmetry line (601a; 601b; 601c) by determining a bottom (611a, 611b, 611c) of the bottle (603) and a neck (613a; 613b; 613c) of the bottle (603), particularly preferably in the respective transmission images (600a; 600b; 600c) .

9. The method according to one of claims 1 through 8, wherein the method also includes;
(f) inference of a content of an item (23; 53; 104; 402, 404; 501; 603) with symmetry properties, taking into account an outer material of the item.

10. A computer program with program code for carrying out a method according to one of claims 1 through 9, when the computer program is executed in a computer system.

11. A data storage device with a computer program product according to claim 10.

12. A data stream with a computer program according to claim 10.

13. A device (210) for image processing, having at least one processor (211) that is configured to carry out a method for detecting an item (23; 53; 104; 402, 404; 501; 603) with symmetry properties inside an inspection object based on at least one transmission image (1a; 40a; 400a; 500a; 600a; 600b; 600c) of the inspection object according to one of claims 1 through 10.

14. An X-ray inspection system (100) with a transport apparatus (116) leading through an irradiation tunnel (114) and X-ray sources (106 and 108) arrayed around the transport apparatus (116), which emit X-rays in at least two different irradiation planes, with a respective detector array (110 and 112) oriented in each of these planes, wherein the X-ray inspection system has - or is operatively coupled to - a device (210) for image processing according to claim 13.

## Revendications

1. Procédé de détection d'un objet (23; 53; 104; 402, 404; 501; 603), en particulier d'un récipient, ayant au moins une propriété de symétrie à l'intérieur d'un objet d'inspection (102), par exemple d'une pièce de bagage, sur la base d'au moins une image de transmission (1a; 40a; 400a; 500a; 600a; 600b; 600c) de l'objet d'inspection (102), cependant que le procédé comporte une étape incluant la génération d'une image de transmission (1a; 40a; 400a; 500a; 600a; 600b; 600c) par inspection d'un objet d'inspection (102) au moyen de rayonnement ionisant, et comporte ensuite les étapes suivantes :
(a) détection de bords (29, 31; 59, 65; 410a, 412a, 410b, 412b, 442, 446, 418a, 420a, 418b, 420b, 444, 448; 512a, 512b) d'objets contenus dans l'image de transmission (1a; 40a; 400a; 500a; 600a; 600b; 600c) pour la génération d'une image de bord (1b; 40b; 400b; 500b) ; et
(b) détection de l'objet (23; 53; 104; 402, 404; 501; 603) par détermination d'une ligne de symétrie (27; 61; 408, 416, 511; 601a; 601b; 601c) de l'objet (23; 53; 104; 402, 404; 501; 603), contenu dans l'image de transmission (1a; 40a; 400a; 500a; 600a; 600b; 600c), ayant au moins une propriété de symétrie, par repérage de paires, agencées symétriquement les unes par rapport aux autres quant à la ligne de symétrie (27; 61; 408, 416, 511; 601a; 601b; 601c) à déterminer, de pixels de bord de l'image de bord (1b; 40b; 400b; 500b), **caractérisé en ce que**
à l'étape (b), lors de la détermination de la ligne de symétrie (27; 61; 408, 416, 511; 601a; 601b; 601c) dans l'image de bord (1b; 40b; 400b; 500b), seuls des pixels de bord pour lesquels la ligne de symétrie (27; 61; 408, 416, 511; 601a; 601b; 601c) dans l'image de transmission (1a; 40a; 400a; 500a; 600a; 600b; 600c) se trouve dans la zone d'image de l'objet (23; 53; 104; 402, 404; 501; 603) auquel les pixels de bord appartiennent sont pris en compte, et
à l'étape (b), sur la base de valeurs d'intensité de pixels individuels dans l'image de transmission (400a), il est déterminé de quel côté d'un bord observé (410a, 410b, 418a) une zone d'image (424, 426, 430) de l'image de transmission (400a) peut être associée à l'objet (402, 404) appartenant au bord (410a, 410b, 418a).

2. Procédé selon la revendication 1, cependant que le procédé comporte en outre :
détermination d'au moins un descripteur de caractéristique pour au moins une zone d'image dans les environs d'un pixel de bord choisi dans l'image de transmission, par exemple sur la base d'une transformation, invariante d'échelle, de caractéristique de la zone d'image, et
comparaison du au moins un descripteur de caractéristique avec des valeurs de référence afin de valider en tant qu'un bord extérieur d'un récipient le pixel de bord choisi.

3. Procédé selon une des revendications 1 ou 2, cependant que, à l'étape (a), l'image de bord (1b; 40b; 400b; 500b) est générée sur la base d'informations de matériel associées à des pixels individuels de l'image de transmission (1a; 40a; 400a; 500a; 600a; 600b; 600c).

4. Procédé selon une des revendications de 1 à 3, dans lequel, à l'étape (b), respectivement des pixels de bord de bords (442, 446, 444, 448) orthogonaux à une ligne de symétrie (408, 416) ne sont pas pris en compte lors de la détermination de la ligne de symétrie (408, 416).

5. Procédé selon une des revendications de 1 à 4, cependant que, à l'étape (b), uniquement des pixels de bord (434, 436) sont pris en compte lors de la détermination de la ligne de symétrie (408) si les bords respectifs (410a, 410b) présentent aux pixels de bord (434, 436) des vecteurs directionnels (434v, 436v) associés relativement à la ligne de symétrie (408) et constituent des angles de bord qui se complètent à 180° ou à 360°.

6. Procédé selon une des revendications de 1 à 5, cependant que le procédé comporte en outre :
(c) segmentation d'un objet (501) ayant des propriétés de symétrie dans l'image de bord (500b) par détermination d'une ligne de contour (505) de l'objet (501), cependant que, à l'étape (c), pour deux bords (512a, 512b) déterminés comme symétriques par rapport à une ligne de symétrie (511), des partie manquantes (512c) des bords (512a, 512b) sont complétées en symétrie inversée par rapport à la ligne de symétrie (511) si les partie manquantes (512c) se trouvent dans une zone de recouvrement (509) dans laquelle l'objet (501) et le bord (512b) de l'objet (501) sont partiellement recouverts par un autre objet (503), cependant que la zone de recouvrement (509) est déterminée sur la base de valeurs d'intensité dans l'image de transmission (500a).

7. Procédé selon une des revendications de 1 à 6, cependant que le procédé détermine un objet (603) ayant au moins une propriété de symétrie dans au moins trois images de transmission (600a; 600b; 600c) du même objet d'inspection à partir de différentes directions de passage du rayonnement, et que le procédé comporte en outre :
(d) validation des lignes de symétrie (601a; 601b; 601c) par projection dans un espace 3D et vérification de la position de droites d'intersection des plans de symétrie les unes par rapport aux autres dans l'espace 3D.

8. Procédé selon une des revendications de 1 à 7, cependant que le procédé est conçu pour la détection de bouteilles (603) en tant que l'objet ayant au moins une propriété de symétrie, par exemple dans une pièce de bagage en tant qu'objet d'inspection, et que le procédé comporte en outre de préférence :
(e) détermination, dans les images de transmission (600a; 600b; 600c) respectives, d'une direction pour la ligne de symétrie (601a; 601b; 601c) respective, ce qui a lieu en ce que, particulièrement de préférence, dans les images de transmission (600a; 600b; 600c) respectives, un fond (611a, 611b, 611c) de la bouteille (603) et un goulot (613a; 613b; 613c) de la bouteille (603) sont déterminés.

9. Procédé selon une des revendications de 1 à 8, cependant que le procédé comporte en outre :
(f) déduction d'un contenu d'un objet (23; 53; 104; 402, 404; 501; 603) ayant des propriétés de symétrie en tenant compte d'un matériel extérieur de l'objet.

10. Programme d'ordinateur doté de codes de programme pour la réalisation d'un procédé selon une des revendications de 1 à 9 quand le programme d'ordinateur est exécuté dans un système d'ordinateur.

11. Support de données doté d'un programme d'ordinateur selon la revendication 10.

12. Flux de données doté d'un programme d'ordinateur selon la revendication 10.

13. Dispositif (210) de traitement d'images comportant au moins un processeur (211) conçu pour l'exécution d'un procédé de détection d'un objet (23; 53; 104; 402, 404; 501; 603) ayant des propriétés de symétrie à l'intérieur d'un objet d'inspection, sur la base d'au moins une image de transmission (1a; 40a; 400a; 500a; 600a; 600b; 600c) de l'objet d'inspection selon une des revendications de 1 à 9.

14. Installation radiologique d'examen (100) comportant un équipement de transport (116) acheminant à travers un tunnel de rayonnement (114) et des sources de rayons X (106, 108) agencées autour de l'équipement de transport (116), lesquelles émettent des rayons X (106, 108) dans au moins deux plans de rayonnement différents sur lesquels est respectivement aligné un agencement de détecteurs (110, 112) associé, cependant que l'installation radiologique d'examen comporte un dispositif (210) de traitement d'images selon la revendication 13 ou y est couplée fonctionnellement.
